# EUROPEAN PATENT SPECIFICATION

(11) **EP 0 337 582 B1**
(45) Date of publication and mention of the grant of the patent: **14.09.1994**
(21) Application number: 89201265.9
(22) Date of filing: 27.10.1982
(51) Int. Cl.: G11B 15/467, G11B 5/588, G11B 15/48

(54) **Video tape recorder servo system having high speed control track lock capability**
Servosystem für Videobandgerät mit Hochgeschwindigkeitsverriegelung auf einer Steuerspur
Système d'asservissement pour enregistreur vidéo pouvant se verrouiller à grande vitesse sur une piste de commande

(30) Priority: 17.09.1982 WO PCT/US82/01284
(43) Date of publication of application: 18.10.1989
(62) Divisional of application: 82903616.9
(73) Proprietor: AMPEX SYSTEMS CORPORATION, Redwood City, California 94063-3199 (US)
(72) Inventor: Rodal, David R, California 94303 (US)
(74) Representative: Horton, Andrew Robert Grant

(56) References cited:
- EP-A- 0 091 190
- GB-A- 1 157 940
- GB-A- 2 018 002
- GB-A- 2 023 309
- US-A- 3 594 498
- US-A- 4 115 800
- US-A- 4 163 993
- US-A- 4 210 939
- PATENT ABSTRACTS OF JAPAN vol. 5, no. 5 (P-44)(677) 14 January 1981,& JP-A-55 135355 (MATSUSHITA DENKI SANGYO KABUSHIKI KAISHA) 22 October 1980,
- PATENT ABSTRACTS OF JAPAN vol. 5, no. 107 (P-70)(779) 11 July 1981,& JP-A-56 047944 (NIPPON DENSHIN DENWA KOSHA) 30 April 1981,

## Description

The present invention generally relates to rotary head tape recording and reproducing apparatus and, more particularly, to a method and apparatus for controlling the transport of a tape during changes in the velocity of tape transport, and in its preferred embodiment, while maintaining tape transport servo lock and reproducing disturbance free information recorded on the transported tape during the velocity change interval.

When a video tape recording and reproducing apparatus is operated to assemble a video program, it is typically necessary to perform editing operations to formulate the desired program content from various video program sources. In the past, a program has often been assembled using several video recording and reproducing machines, and it has been necessary for the operator to synchronize several such machines prior to performing an editing operation. If several sources of material are to be used in formulating a video program, several video recording and reproducing machines must be placed sequentially in the reproducing mode while one other such machines is placed in the record mode to record the material on a single master tape. It has been necessary to perform a pre-roll synchronizing process by operating each of the several program source machines in their play or reproducing mode, and then varying the capstan velocity of the source apparatus by executing a "tape velocity override" (TSO) operation in each of the apparatus. As used herein, 'velocity' in contrast to 'speed' means a velocity of displacement of tape with directional significance, unless the context warrants otherwise and includes zero speed of tape transport. A TSO operation is executed to transport the tape at a velocity different from the normal recording and reproducing velocity, until the recorded time code reproduced from the tape (or color frame signal extracted from reproduced video information) associated with each of the machines between which a transfer of program material is to occur is synchronized for synchronous reproduction or recording of video program material. At that time, the recording machine is synchronously switched to record segments of the program material from the other program source machine that synchronously reproduces the desired segment. It should be quite apparent that if the operation of all program source machines can be rapidly synchronized, i.e., be placed in a color frame control track and capstan tachometer (tach) servo lock operating condition, then editing would be simplified and executed more expenditiously, particularly when several machines are being used to supply program source material for recording on the master tape. In a rotary head video tape recording and/or reproducing apparatus, such servo lock operating condition is achieved when the head is rotating and the tape is being longitudinally transported at desired nominal velocities, respectively, with the rotational or angular position (commonly referred to as phase) of the head being synchronized to a particular transition of the control track signal periodically recorded along the longitudinally transported tape and thereby with the position (or phase) of the tape. Prior art apparatus such as described in US-A-4163993 often require several seconds to obtain control track servo lock and to become color frame synchronized relative to a studio reference timing signal. It should be apparent that if a machine can be rapidly accelerated and color frame control track servo locked within a few milliseconds, rather than several seconds, the synchronizing of several machines would be facilitated and editing operations would be simplified.

Accordingly it is one object of the invention to operate a rotary head recording and reproducing apparatus to control the transport of a tape during changes in the velocity of tape transport, permitting information recorded on the tape to be reproduced with minimum time disturbances and without the loss of information.

More particularly, it is an object of the present invention to operate a rotary head tape recording and reproducing apparatus to virtually synchronize the angular position and velocity of the rotating head (or heads) with respect to a longitudinally transported tape before the tape is transported at the desired longitudinal velocity.

Another object of the present invention is to provide a video tape recording and reproducing apparatus that is capable of achieving rapid control track and capstan servo lock by acquiring color frame synchronization before executing a tape transport velocity change to the normal record and/or reproduce velocity so as not to lose the acquired color frame synchronization as a result of such velocity change.

Yet another object is to provide an apparatus of the foregoing type which, in its preferred embodiment, accomplishes the color frame synchronization and tape transport velocity change while reproducing recorded video information which upon display is productive of a disturbance-free picture.

Still another object of the present invention is to provide an apparatus of the foregoing type which, when the transported tape is stopped from being transported at a velocity other than zero speed, the deceleration of the tape is initiated precisely with respect to the system controlling reference, typically the station vertical sync signal, so that subsequent acceleration of the tape to normal record and/or reproduce velocity can be achieved with an instantaneous control track servo lock condition.

Yet another object of the present invention is to provide an apparatus of the foregoing type, which when the transported tape is stopped from being transported in a non-color frame control track servo locked mode, e.g., during shuttle, jog or variable velocity reproducing operating modes, it is stopped with an identifiable control track transition location precisely positioned with respect to the nominal rotational plane of the video reproduce head location relative to the longitudinal direction of the tape transport, so that the transport of the tape can be subsequently started with an instantaneous control track servo lock condition.

A more detailed object of the present invention is to provide an apparatus of the foregoing type, which when the tape is stopped during a still field operating mode, or is being transported at a relatively low velocity slow motion reproducing operation, and a normal velocity play command is received, the apparatus delays the acceleration of the tape to normal velocity until a field sequence signal extracted from the reproduced video information is coincident with the occurence of the same field sequence signal of a controlling reference and, upon such coincidence, accelerating the transport of the tape to the normal reproduce velocity while maintaining the coincidence condition during such acceleration.

### SUMMARY OF THE INVENTION

The state of the art with respect to which the independent claims are characterised is represented by the aforementioned US-A-4163993.

In one aspect the invention provides apparatus for changing in response to a velocity change command signal the velocity of transport of a tape from an initial velocity to a substantially different, selected velocity, the apparatus including means for providing a system reference timing signal identifying periodically occurring intervals and a timing signal indicative of the rate of reproduction of information recorded on the tape relative to the system reference timing signal, the said timing signal identifying periodically occurring intervals, which correspond to the periodically occurring intervals defined by said system reference timing signal and from which tape transport velocity can be determined; a rotary magnetic head located at a position relative to the transported tape for reproducing the recorded information signals; and means for controlling the velocity of transport of the tape in response to the velocity change command signal; characterised in that the said means for controlling controls the transport of the tape during the velocity change interval in accordance with the system reference timing signal and said timing signal such that at least at the end of the velocity change interval there is a selected timing relationship between the system reference signal and the said timing signal and the net displacement of the tape at the end of said velocity change interval is proportional to the product of the velocity change and the velocity change interval.

Preferably the tape has an information signal recorded thereon, which information signal contains a timing component constituting said timing signal. The apparatus preferably includes means for detecting a selected time relationship between an identifiable interval of the system reference timing signal and a corresponding identifiable interval of the timing component contained in the reproduced information signal and generating said command signal.

The apparatus may include means for retaining a number equal to a difference in intervals between said reference timing signal and said information signal timing component during the velocity change interval; said velocity controlling means may be operative to terminate said velocity change interval when the tape is at said selected velocity and the number maintained by said difference retaining means is zero.

According to another aspect the invention provides a method of changing the velocity of transport of a tape from an initial velocity to a normal velocity at which video information is reproduced from the tape, the initial velocity being substantially different from the normal velocity, the tape being driven by a servo-controlled capstan and transported in a helical path about a tape guide as video information recorded along tracks on the tape is reproduced by at least one rotating transducing head, there being a system reference timing signal identifying periodically occurring intervals and a timing signal indicative of the rate of reproduction of information recorded on the tape relative to the reference timing signal, the said timing signal identifying periodically occurring intervals, which correspond to the periodically occurring intervals defined by said system reference timing signal and from which tape transport velocity can be determined, characterised in that during an interval of velocity change between the initial velocity and the normal velocity the transport of the tape is controlled in accordance with the system reference timing signal and said timing signal, such that at least at the end of the velocity change interval there is a selected timing relationship between the system reference timing signal and the said timing signal and the net displacement of the tape at the end of said velocity change interval is proportional to the product of the velocity change and the velocity change interval.

### DESCRIPTION OF THE DRAWINGS

Figure 1 is a graph illustrating the desired and actual profiles of the tape position versus time, specified in television field intervals, during the acceleration of the transport of the tape from stop to normal velocity, with the tape position taken relative to the nominal position of the rotating video head that scans the tape to reproduce video information therefrom;
Figure 2 is a graph illustrating desired and actual capstan velocity profiles versus time during acceleration of the transport of the tape from stop to normal velocity;

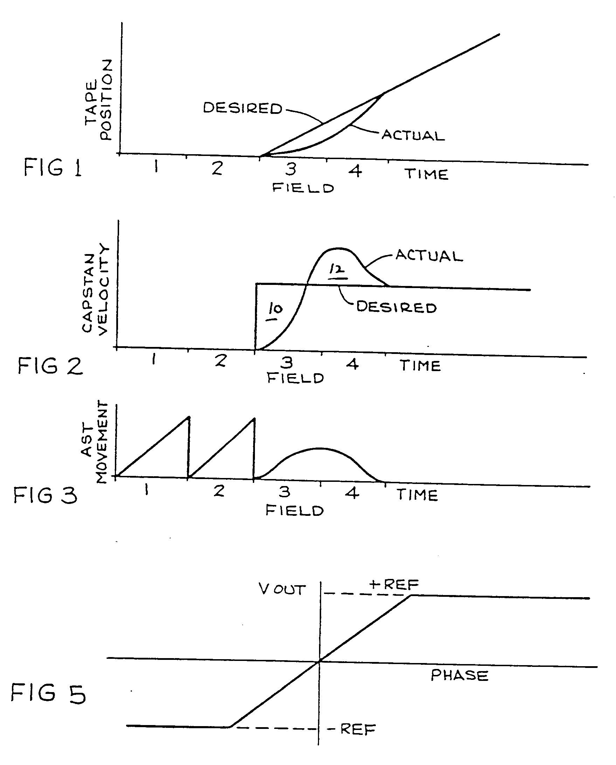

Figure 3 is a graph of movement of a video head mounted at the end of a movable element which moves the video head transversely relative to the longitudinal direction of a track of recorded video information and shows the displacement of the head by the movable element during illustrated field intervals, with the first two field intervals reproduced while the transport of the tape is stopped, or at zero tape speed, commonly referred to as the still field reproducing mode. The third and fourth field intervals show the displacement required of the head to maintain it registered on a track during acceleration of the transport of the tape from stop to normal reproducing velocity;
Figure 4 is a functional block diagram of a capstan servo arranged to operate in accordance with the present invention;
Figure 5 is a voltage versus phase characteristic of the capstan servo described herein;
Figure 6 is a functional block diagram illustrating the portion of the capstan servo of the present invention which measures the phase, i.e., angular position of the capstan relative to its controlling reference;
Figure 7 is a functional block diagram of the stop servo incorporated in the capstan servo of the present invention which correctly positions the tape relative to the nominal tracking position of the video reproduce head when stopping the tape from a non-color frame control track locked operating condition;
Figures 8A, 8B, 8C and 8D together comprise an electrical schematic diagram of a portion of the capstan servo circuitry of the present invention illustrating the phase comparator circuitry shown in the block diagram of Figure 6;
Figures 9A, 9B, 9C and 9D together comprise an electrical schematic diagram of the remainder of the capstan servo circuitry, illustrating the sample and hold circuitry and the stop servo circuitry shown in the block diagram of Figure 7, as well as the circuitry which performs the color framing function;
Figure 10 is a functional block diagram of an automatic head position tracking system which operates to maintain a movable rotary head registered on tracks of recorded information as information is reproduced from the tape transported at different velocities; and
Figure 11 is a logic diagram of the synthetic control track signal generator operatively associated with the capstan servo of the present invention.

### DETAILED DESCRIPTION

Broadly stated, the present invention is directed to a method and apparatus for controlling the transport of a tape longitudinally transported in a path relative to a rotating head as information is reproduced from the tape during changes in the velocity of the tape transport permitting recorded information to be reproduced without objectionable loss and with minimum time disturbance. In the preferred embodiment described hereinbelow with reference to the drawings, the tape transport velocity change is achieved with virtually an immediate synchronous operating condition obtained between the rotating record and/or reproduce head and the longitudinally transported tape before a tape transport velocity change to a normal record and/or reproduce transport velocity. In the preferred embodiment, a rotary head video tape record and/or reproduce apparatus is color frame control track servo locked immediately upon commanding the apparatus to enter the normal play tape velocity operating condition from a tape transport stop condition or from a tape transport velocity other than the normal record and reproduce velocity. In its most preferred embodiment, the apparatus is part of a helical wrap video tape recording and reproducing apparatus of the type which has a video reproducing head mounted at the end of a movable element which is capable of moving the head transversely relative to the longitudinal direction of a track along the tape. A head position tracking servo controls the movable element to cause the head to follow a track as information is reproduced therefrom and selectively repositions the head to begin following the next desired track from which information is to be reproduced. With a head position tracking servo, the apparatus is capable of the noise-free reproduction of recorded information at various velocities of tape transport. In such apparatus arranged to record and reproduce video (i.e., television signal) information, the movable head enables various special effects to be reproduced from the recorded video information, such as still field or frame motion, variable slow motion, fast motion and reverse motion. This capability is described in several patents and applications, including US A 4,163,993 to Ravizza, and is incorporated in various video production recorders marketed by Ampex Corporation, such as the models known as VPR-1 and VPR-2. In the video production recorders marketed by Ampex, a single video head is provided to reproduce video information recorded on the tape and is controlled in the manner described in the aforementioned Ravizza patent to reproduce the information while the tape is transported at various velocities and in opposite directions to generate special motion effects. As is described in the aforementioned Ravizza patent, the movable element is controllable to cause the video head to reliably follow a track during the reproduction of video information therefrom and to correctly position the head to begin following' the next desired track from which video information is to be reproduced.

When the apparatus is operated to reproduce still field effects, the transport of tape is stopped, i.e., at a speed of zero, the movable video head must be reset at the end of the scan of each track to begin following the same track, hence, repeat the reproduction of the same field of video information. Such resetting is effected for as long as the apparatus is operated to reproduce the still field motion effect. During such operation, the voltage applied to the movable element for producing the desired displacement of the element is in the form of a sawtooth wave form, whose level is examined against a reset determining reference during the revolution of the video head to determine if the movable element is to be reset or permitted to remain in position at the end of the scan of each track by the movable video head, all as is fully discussed in the aforementioned Ravizza patent. When the head position tracking servo is operating together with the apparatus of the present invention, switching from the still motion effect operation when the transport of the tape is stopped to the normal reproduction of the video information when the tape is transported at the normal reproduce velocity permits proper color framing to be accomplished when the tape transport is stopped followed by rapid acceleration of the transport of the tape to the normal reproduce velocity with the servoed movable head reproducing each recorded track once without objectionable signal degradation. It is important to appreciate that color frame control track servo lock is retained and a video information signal is reproduced without objectionable signal degration through the tape acceleration interval with no resetting and repeat reproduction of a track occurring. The acceleration of the tape transport is sufficiently fast that color framing is retained and the video information is reproduced from each track scanned by the video head without any head deviation from the track that would introduce disturbances in the display of the reproduced video information.

The velocity change can be executed in accordance with the present invention without objectionable loss of information and with minimum timing disturbance introduced into the reproduced information during an operating condition when the velocity of tape transport is changed between two velocities not starting with a zero transport velocity and not ending at a normal reproduce velocity; thus the mode of reproduction may be changed between different special motion effects without entering the still field mode. As will be described in further detail hereinafter, the velocity change operation is executed in the same manner from all special effects tape transport speeds. However it may be preferable to first change the transport of the tape to zero tape transport velocity and then incrementally move the tape after the transport of the tape is stopped to position an identifiable control track transition precisely relative to the nominal rotational plane of the undeflected video head position when the operation is executed from a special effects tape transport velocity other than zero velocity or stop. This facilitates the execution of the subsequent acceleration of the tape to the desired final tape transport velocity without objectionable loss of reproduced information or introduction of disturbances in the display of the reproduced information. In accordance with the present invention, a signal, such as the control track signal, timing information included in the reproduced information, e g., vertical sync or the equivalent included in a television signal, capstan tach, or the like, must be provided in a manner so as to indicate the nominal velocity of transport of the tape during any velocity from or to which the tape is transported during a velocity change.

The present invention includes circuitry which selectively functions under special conditions determined by such factors as: the operating mode of the apparatus; whether a change in the mode of operation is commanded; whether the transport of the tape is accelerated from stop condition or a velocity other than the normal tape transport velocity; and whether the tape is previously stopped from a control track locked condition or a noncontrol track locked condition. These conditions determine the velocity of transport of the tape and, therefore, the nature of the control required to effect the desired velocity change operation to the selected final tape transport velocity without objectionable loss of reproduced information or introduction of disturbances in the display of the reproduced information. The selected final tape transport velocity is determined by a system timing signal provided to maintain selected tape transport velocity. The tape transport velocity control circuitry relies for its operation on its ability to control the execution of the desired velocity change so that the net displacement between nominal plane of rotation of the rotary head and the tape during the velocity change interval is proportional to the product of (i) the difference between the final selected velocity of tape transport and the velocity of tape transport from which the velocity change interval is executed and (ii) the time taken to execute the velocity change. When a velocity change is executed to final selected tape transport velocity corresponding to the normal record and/or reproduce tape transport velocity, timing information indicative of the rate of reproduction of the information recorded on tape relative to a system time reference is employed to effect the control of the velocity change. A recorded control track signal and vertical sync contained in the reproduced information are examples of such signals available in rotary head video tape recording and reproducing apparatus. Information signals recorded on the tape that contain a timing component which is synchronously recorded with a control track information signal that contains identifiable separate intervals periodically recorded along the tape provide the ability to obtain accurate measures of the velocity at which the tape is transported and position of the transported tape with respect to the nominal rotational plane of the rotary head location in the longitudinal direction of tape transport.

In accordance with the present invention, the tape transport control circuitry is responsive to a system reference timing signal and at least a timing signal of corresponding nature from which the velocity of tape transport and position of the transported tape with respect to the nominal rotary head location in the longitudinal direction of tape transport can be determined. Each of these signals defines a plurality of separate and identifiable intervals of corresponding nature that periodically recur. To facilitate the desired control of the tape transport velocity change, it is advantageous to employ a timing component contained in the reproduced information signal and the control track signal recorded on the tape as the timing signal with respect to which the execution of the velocity change is controlled. Upon the occurrence of a selected time relationship between identical ones of the identifiable intervals in the received signals, the tape transport control circuitry generates a command signal to the tape transport servo associated with the tape transport drive mechanism to effect the selected velocity change in tape transport to cause the tape to be transported at a selected final velocity. The servo responds to the command signal to control the tape transport drive mechanism to cause execution of the tape transport velocity change at a rate for a velocity change interval that results in a displacement of the transported tape at the end of the velocity change interval proportional to the aforedescribed product of the velocity change and interval of the velocity change, adjusted for any residual displacement of the rotating head in the direction of tape transport at the end of the velocity change interval, which head is operated to reproduce the information signal. This adjusted displacement is referred to herein as net displacement. The proportional relation between the displacement and the aforementioned product is determined by the acceleration characteristic of the portion of the tape transport mechanism affecting the acceleration of the tape. This can be determined for the tape transport mechanism by observing the velocity profile followed by the transported tape in response to a step velocity change command.

To maintain a disturbance-free reproduction of the recorded signal during the velocity change interval, it is preferred to execute the velocity change so that the timing relationship between the received identifiable intervals of the timing signal and of the system reference timing signal is retained during the velocity change interval. The rate of change in tape transport velocity required to retain such desired timing relationship is determined by the difference between the reference timing signal frequency and the velocity of the transported tape (hence, the system timing signal frequency) at the time of the initiation of the velocity change.

As will become apparent from the following description of preferred embodiments of the present invention, it is preferable that the tape displacement be achieved without a change in the timing relationship between recurring identifiable intervals of the reference timing signal and of the timing signal to a corresponding timing relationship of periods of the periodically occurring signals different from those which resulted in the initiation of the velocity change. However, it may not be possible to accelerate the tape at a sufficient rate to achieve this, for example, when large and massive tape reels or delicate tape which is incapable of withstanding the stress associated with such acceleration are used. Accordingly, a difference count is maintained between the number of periods of the system reference timing signal and the timing signal occurring during the tape transport velocity change interval, which is representative of the displacement, so that, although the desired timing relationship resulting in the initiation of the tape transport velocity change is lost during the execution of the velocity change, it is recaptured at the conclusion of the execution of the velocity change. Thus, this necessarily results in retaining the transport servo lock condition established at the time of the initiation of the tape transport velocity change at the conclusion of the velocity change interval. The transport servo responds to a velocity change command signal generated upon the occurrence of a selected time relationship between identical ones of the identifiable intervals in the reference and system timing signals to control the tape transport drive mechanism to cause execution of the tape transport velocity change at a rate that results in the net displacement of zero of the longitudinal tape position relative to the nominal rotary head position in the direction of tape transport.

In a rotary head tape recording and reproducing apparatus in which the rotary head is not permitted to be displaced in a direction transverse to the longitudinal direction of the track, the transport drive mechanism must drive the tape according to a velocity profile which includes an interval during which the tape is transported to a velocity different from the selected final velocity in order to achieve the desired net displacement condition. For example, if the tape is transported at a velocity less than the selected final velocity at the time of initiation of the velocity change, the tape must be transported to a velocity greater than the selected final velocity for an interval to produce a zero net displacement. Conversely, if the tape is being transported at greater velocity than the selected final velocity at the time of the initiation of the velocity change, the transport of the tape must be decelerated to a velocity less than the selected final velocity for an interval to produce a zero net displacement.

In rotary head tape recording and reproducing apparatus provided with a head that is displaceable in the longitudinal direction of the track to maintain track registration, the head can be displaced to aid in achieving the aforedescribed desired zero net displacement condition during a tape transport velocity change. The head is displaced in a direction to reduce the magnitude of any such displacement. Therefore, the tape transport velocity change may be executed according to a velocity profile that does not require a velocity of tape transport during the velocity change interval that is greater than the selected final velocity (when a velocity change is executed from a tape transport velocity less than the final velocity) or less than the selected velocity (when a velocity change is executed from a tape transport velocity greater than the final velocity). However, the rate of tape transport velocity change must be sufficient to enable the displaceable head to be displaced a sufficient distance to compensate for the displacement that will result from such velocity change in the longitudinal tape position relative to the nominal position of the displaced head in the direction of tape transport. The result of following such velocity profile, however, is a permanent displacement of the head when the normal tape transport velocity is reached. This may be undesirable because a constant timing error is introduced in the information reproduced by the permanently displaced head.

When the transport of the tape is stopped from a noncontrol track locked velocity operating condition, such as may occur when the tape is transported by a video tape recording and reproducing apparatus during a shuttle, a jog or a variable velocity slow motion or fast motion operation, a stop servo system operates to stop the transport of the tape with an identifiable recorded control track transition positioned precisely relative to the nominal plane of rotation of the undeflected position of the rotary video reproduce head. This conditions the apparatus so that in response to the generation of a reproduce command being initiated by an operator for the purpose of having the video tape recording and reproducing apparatus operate in a desired reproducing mode, the recording and reproducing apparatus is caused to reproduce recorded video information and is control track and capstan tach locked virtually immediately, i.e., within a time following the receipt of a velocity change command that is less than an interval defined by just less than the number of video fields required to fully encode the television signal. For example, two fields are required to fully encode a monochrome television signal, four fields for a NTSC color television signal and eight for a PAL color television signal. SECAM color television signal is defined by a twelve field sequence. For the purposes of this invention, however, a four field sequence enables execution of the desired velocity change. Moreover, if the tape transport mechanism is commanded to transport the tape at the normal record and/or reproduce velocity following such stop operation, control track synchronization and color frame synchronization of the operation of the apparatus is acquired prior to initiating acceleration of the transport of the tape at all.

Turning first to Figure 11, a synthetic control track signal is generated by a circuit 200 for use in the present invention to provide to the control track servo information indicative of the position of the longitudinally transported tape relative to the nominal plane of rotation of the rotary head when the tape transport is stopped. Vertical sync is extracted from the reproduced video information by conventional circuitry (not shown) included in video tape recording and/or reproducing apparatus as the playback video head scans the tape, and is provided at an input 212 and coupled to the clock input of a flip-flop 216. A No. 1 field identification signal (of a four field sequence in a NTSC format color video information signal and of an eight field sequence in a PAL format color video information signal) also conventionally extracted from the reproduced video information signal is provided to a delay one short circuit 228. The delay circuit 228 provides an output signal to the "set" input terminal of the flip-flop 216 to synchronize the same to the occurrence of the field No. 1 identification signal. The time constant of the one shot circuit 228 is set to properly locate the leading edge of the field No. 1 identification signal relative to the proximate control track transition of the synthetic control track signal into which the identification signal is inserted. When connected as shown, the flip-flop 216 is clocked by play back vertical sync and operates as a divide by two divider and provides a 30 Hertz (Hz) frame rate square wave signal at its output. The period of the square wave signal generated by the flip-flop 216 is therefore equal to that of a normal control track signal. However, the 60 Hz rate transitions of the square wave signal are coincident with the 60 Hz vertical sync signal, whereas the transitions of conventional control track signals are offset relative to vertical sync.

The square wave signal is employed to form a synthetic control track signal and, for uses of the synthetic control track signal irrelevant to the present invention, is combined with a short pulse to provide field identification information therein. The field identification pulse is added to the synthetic control track square wave signal synthesized by the flip-flop 216. The circuitry shown in Figure 1 provides a narrow pulse after the field No. 1 identification signal is received. It is delayed by the amount of the delay provided by the one shot 228. The delay circuit 228 times out and its Q-not output is coupled to trigger a monostable multivibrator, or one-shot 228. The one-shot 230 responsively produces a narrow pulse at the proper time for adding to the square wave signal as the desired field identification signal and has a controlling time constant that is set to effect the generation of a field No. 1 identification signal of common duration for insertion in the synthetic control track signal. For a NTSC format color video information signal system the field No. 1 identification signal is inserted in the synthesized squae wave signal to occur every two periods of the signal, since the identification signal is at a rate of 15 Hz (or 1/2 the frequency of the 30 Hz square wave signal). For a PAL system, the field No. 1 identification signal is at a rate of 1/4 the frequency of the synthesized square wave signal, hence, is inserted to occur every four periods of the synthesized signal. The output of the one-shot 230 is combined with the square wave of the flip-flop 216 in an NAND gate 218, and a synthetic control track signal having field identification signal information is produced at an output 232.

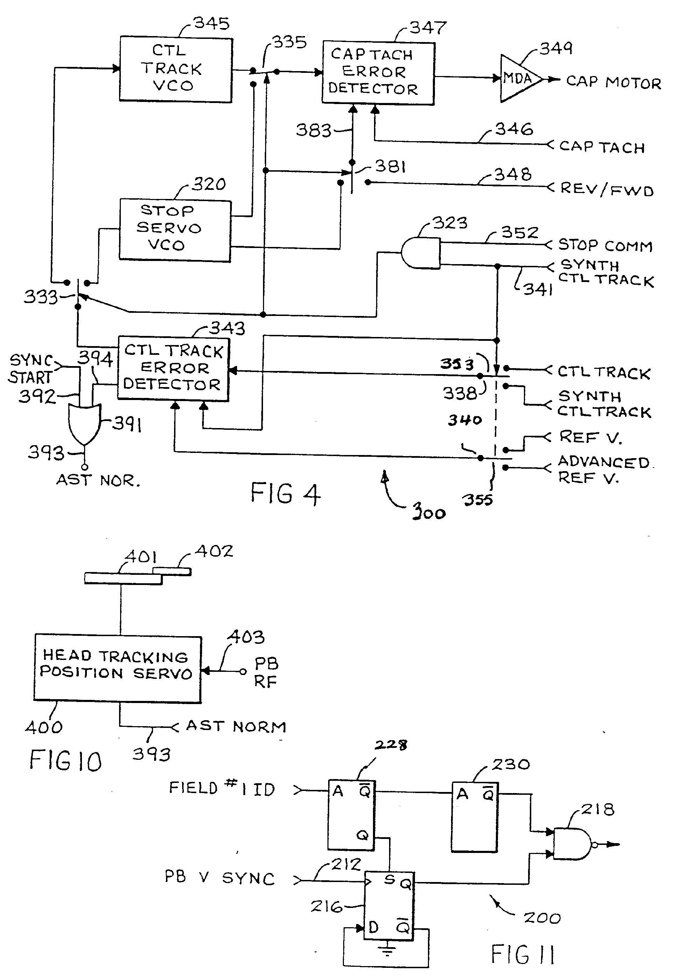

As previously mentioned, the timing of the synthetic control track is different from that of the conventional control track signal, which signal requires some modification for use in the operation of the control track servo. When the tape is driven at the normal record and/or reproduce velocity under servo control relative to the conventional control track and capstan tachometer signals, the control track signal transitions occur between vertical sync pulses. With reference to Figure 4, a control track servo 300 includes a control track error detector 343 that generates a control track related error signal in the form of a tape speed related voltage level that controls a following control track voltage controlled oscillator 345, which provides an output signal at a frequency that determines the speed of the capstan motor. This output signal is coupled to one input of a capstan tachometer error detector 347 and serves as a reference signal for comparison to the capstan tachometer signal. This error detector 347 provides a capstan servo error signal that is coupled to the capstan motor drive amplifier circuit 349 that responsively controls the drive provided to the capstan motor (not shown) to maintain the transport of the tape at the desired speed.

The control track related error signal is generated by sampling a ramp output of a linear ramp generator, with the sample being taken and held at a particular time, such as at the time of a control track transition. The ramp is reset by a delayed reference vertical sync signal. Samples are taken at the occurrences of control track transitions, which nominally occur at the midpoints of the occurrences of the voltage ramp signals when the tape is transported at the correct normal record and/or reproduce velocity. Variations in the occurrences of the control track transitions relative to the generation of the ramp signal result in the ramp signal being sampled at points along the slope of the ramp signal which are either higher (tape speed too slow) or lower (tape speed too fast) than the midpoint of the ramp signal.

If a control track signal is generated using vertical sync pulses extracted from the video information signal reproduced by the rotating video playback head, the slope of the ramp must be increased because the head rotates, hence, scans along the tape much faster than the longitudinal speed of the tape past the control track playback head. In an interval corresponding to about the duration of 2-1/2 horizontal lines, or about 0.01 of the duration of a video field, the video head passes a longitudinal length of tape which corresponds to the distance the tape moves relative to the conventional stationary control track playback head during the reproduction of one video field. Thus, to compensate for the loss in sensitivity produced by the 100 times increase in the head to tape speed of the video head relative to the head to tape speed of the control track playback head, the slope of the ramp must be increased by the same factor to obtain the same resulting sensitivity.

When the synthetic control track signal is used to control the capstan servo, the slope of the ramp is sharply increased. The slope is increased by switching a switch located within the error detector 343, effectively to remove a large capacitor from the ramp generating circuit included in the control track error detector. The ramp is reset in response to the aforementioned delayed reference vertical sync. The delayed reference vertical sync is generated with an amount of delay which is changed depending upon whether regular or synthetic control track signals are used in the control track error detector 343. The delayed vertical sync is normally delayed by an interval corresponding approximately to the time of a full video field and in the synthetic control track mode, it is delayed by a slightly lesser amount to form an advanced reference vertical signal. The ramp is therefore reset slightly earlier by the advanced reference vertical signal than would otherwise occur.

An important consideration is that the timing of the ramp signal sampling in the control track error detector 343 is controlled so that the desired nominal zero tape speed error voltage level is identical whether the machine is using actual or synthetic control track signals.

Selection of the input signals to the control track servo 300 and slope of the ramp signal used in the error detector 343 are determined by the position of the switches 353 and 355, and the signal status on the synthetic control track command input line 341. Either the normal control track or the synthetic control track signal is selected for coupling to an input terminal 338 by an operator controlled switch 353 shown in Figure 4. Similarly, the normally delayed or advanced reference vertical signal is selected for coupling to an input 340 by another operator controlled switch 355 shown in Figure 4 the switches 353 and 355 being conjointly operated. When the operator initiates operation of the recording and reproducing apparatus to execute a tape transport stop from a non-control track lock operation, the synthetic control track command is provided on line 341. This causes the slope of the ramp sample signal generated in the error detector 342 to be increased as aforedescribed, and switches 353 and 355 to be positioned to couple the synthetic control track signal and advanced reference vertical sync signal to the control track error detector 343.

Thus far, the control track servo 300 has been described as arranged to operate when the transport of the tape is stopped under a control track locked condition. As will be described further hereinafter, the control track servo 300 also includes a stop servo velocity controlled oscillator (VCO) 320 that is switched in the control track servo 300 in place of the control track VCO 345 when the recording and reproducing apparatus is operated to stop the transport of the tape and a synthetic control track signal command is generated. The switching occurs in response to an operator initiated stop command being received over input line 352 while a synthetic control track signal command is also present on input line 341. An AND gate 323 responds to these commands by activating switches 333 and 335 to couple the stop servo VCO 320 between the control track error detector 343 and the capstan tach error detector 347 in place of the control track VCO 345. In addition, a switch 381 is responsive to the AND gate 323 to disconnect the reverse/forward tape transport direction input line 348 from the capstan tach error detector 347. This input line carries a signal provided by the system control that signifies the direction in which the tape is being transported in response to an operator manipulated tape direction control mechanism. In place of that signal, the stop servo provides a tape transport direction signal to the capstan tach error detector 347 over line 383 via switch 381. However, the capstan tach signal received on input line 346 is still provided to the capstan tach error detector 347 for use in controlling the transport of the tape.

In accordance with an important aspect of the present invention, when the tape is stopped and the apparatus is reproducing in the still field reproducing mode and a play command is generated by an operator who wishes to reproduce the recorded material at the normal reproducing or play speed, the apparatus utilizes a signal that identifies which field of a multi-field sequence is being reproduced. As previously indicated, a single field will be repetitively reproduced and the circuitry compares this identified field with the station reference field information. When there is a field match, i.e., the particular field being reproduced is identical to the field within the multi-field sequence of the station reference, then the field match signal enables the play command to be applied to the capstan servo and the capstan servo immediately accelerates the capstan to rapidly bring the speed of movement of the tape up to the normal speed. It should be understood that if the recording is a NTSC format recording of a color video information signal, then the multifield sequence will be a four field sequence. If the recording is of a PAL format signal there is an eight field sequence. The circuitry which performs the identification of a particular field within a four field NTSC format sequence is conventional and in and of itself does not form a part of the present invention, except insofar as the identification information is utilized by the apparatus of the present invention. During reproducing, the playback sync processing circuitry can identify whether field one or field two of a particular frame is being reproduced and this is derived from the relationship of horizontal sync to vertical sync. A color framing circuit identifies whether an odd or even color frame is being reproduced by monitoring the relationship of horizontal sync to the color subcarrier phase relationship. The particular field of a four field sequence is thereby derivable from these relationships so that during reproducing, during still frame or otherwise, two binary inputs are capable of providing the identification of which field of the four field sequence of being reproduced at any given moment. Similarly, for a PAL format recording, a third input will identify which field of an eight field sequence is being reproduced at any given time.

The manner in which the apparatus of the present invention operates when it is switched from a still field reproducing mode to normal speed can be more readily appreciated from the following discussion in conjunction with Figures 1 through 3. As is shown in each of the figures, the abscissa of each of the graphs corresponds to time, and the apparatus changes from still field reproducing to normal speed reproducing in the time required to reproduce no more than five fields of information. In a NTSC system, it may require three field intervals to obtain the match signal and the match signal is required before acceleration begins. The acceleration to normal speed is accomplished in two field intervals. Thus, in Figures 1 through 3, the tape recording and reproducing machine is reproducing in the still field reproducing mode for field intervals one and two, with field interval three being the reference field interval which is matched to the field repetitively reproduced by the record and reproduce apparatus. When this match occurs, the capstan servo is commanded to accelerate the tape to normal speed. In Figure 1, the tape position is shown versus time, and at the start of field interval three, the tape is initially moved and the actual tape movement is shown to be a curved line with the desired tape position shown as a straight line, indicating infinite acceleration which, of course, is impossible to obtain. The graph of Figure 2 illustrates capstan velocity wherein it is desired to instantaneously obtain the actual normal tape velocity which would occur during normal play speed and it is shown to change instantaneously at the beginning of field interval three. However, the actual velocity profile reflects actual rather than infinite acceleration during field interval three and to obtain the desired normal velocity in a manner whereby color framing is retained it is necessary to overshoot the normal speed to regain the timing relationship that was lost during acceleration. Thus, the area shown by the reference numeral 10 must equal the area shown by the reference numeral 12 to regain perfect phase coincidence from the point at which the tape was initially started, i.e., at the start of field interval three. As shown in Figure 1, the actual tape position will lag the desired position during field interval three as the tape is being accelerated and it will gradually be made to coincide with the desired tape position as a result of the velocity exceeding the normal velocity during acceleration.

The preferred embodiment of the present invention includes an automatic scan tracking servo as previously mentioned, which is effective to maintain the head on each track as it is being reproduced and to selectively reposition the head to begin following the next desired track. As shown in Figure 3, during still frame reproduction, such as occurs during the reproduction of fields one and two as illustrated, the head must be reset after the completion of the first field to begin replaying the same track again. At the instant the command to accelerate the tape is received, which instant is signified by a sync start command provided to an OR gate 391 (Figure 4) over input line 392 when the aforedescribed field match occurs and the transport of the tape is less than one-half the normal record and/or reproduce velocity, in either the forward or reverse tape transport directions, an AST normal signal is issued over line 393. It will be appreciated that the AST normal signal is also issued by the OR gate 391 in response to a control track lock condition being achieved. The OR gate 391 receives a signal over its input line 394 from the control track error detector 343 when this condition is achieved, for example, when the transport of the tape is changed from a velocity in excess of the aforementioned one-half normal tape transport velocity to the normal record and/or reproduce tape transport velocity and control track lock is achieved. The AST normal signal is coupled to the input of the automatic head position tracking servo 400 (Figure 10), which responds to inhibit the generation of head position reset commands (except at the limits of the deflection range of the movable element 401 carrying the reproduce head 402) while the tape transport velocity change to the normal record/reproduce velocity is executed. This allows the head to follow the consecutively recorded tracks without being reset, even though the tape is transported at velocities other than the normal record and reproduce velocity during the 2-field interval velocity change. Track following by the movable reproduce head results from the detection of amplitude modulation of the reproduced radio frequency (RF) envelope formed by a carrier that is frequency modulated by the television signal information, which amplitude modulation is caused by the dithering of the movable element 400 as described in the aforementioned US-A-4,163,993. This reproduce signal is coupled from the reproduce head 402 to the automatic head position tracking servo 400 by input line 403.

The automatic head position tracking servo 400 will move the head 402 so as to maintain the head on the track being reproduced during the third (reference) field interval and, as the capstan is accelerated up to normal play speed, it will not have to be reset and it will maintain the head on the next track, i.e., that from which field four is reproduced; thereafter the head will not appreciably move, as is shown by the straight line subsequently of field four. Since the capstan accelerates the tape very rapdily, the automatic scan tracking servo will maintain the head on track and will be operating within its dynamic range, all of which means that the reproducing apparatus will produce a continuous signal and there will be no break-up of the picture viewed in a television monitor.

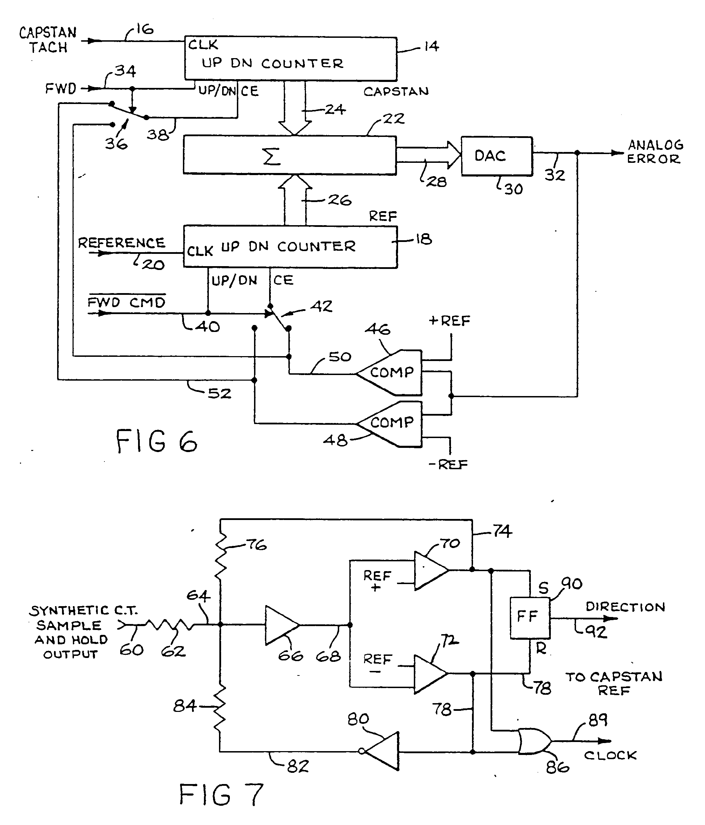

With reference to Figures 4 and 6, after a field match has occurred and the play command is applied to the capstan servo circuitry, the circuitry included in the capstan error detector 347 (Figure 4) and shown in detail in the block diagram of Figure 6 is effective to perform a phase comparison of the actual capstan rotational phase with a reference (provided by the control track VCO 345) and generate an error signal that is applied to the motor drive amplifier 349 which will return the capstan to the exact phase of the reference after the acceleration of the capstan has been completed. In other words, it maintains the field sequence phase relationship between the capstan-driven tape at the start of field three of the field sequence indentification signal as shown in Figure 2 and returns the capstan to coincide with the phase of the reference at the end of the acceleration, i.e., at the conclusion of the reproduction of field four. It should be understood that when the machine is reproducing at normal speed it is in a capstan locked condition and if the tape is to be stopped from normal reproducing, the phase comparator circuitry will also be effective to stop the tape with, as previously mentioned, the control track transitions recorded along the tape precisely located relative to the nominal plane of rotation of the rotary video reproduce head. Thus, when the apparatus is operating in a still field reproducing mode, the tape will be positioned at a preferred predetermined location relative to control track locations so that when the acceleration command is provided after a field match is obtained, the phase comparator will maintain the transport of the tape during acceleration in a control track servo locked condition.

The phase comparator is shown in the block diagram of Figure 6 to include an 8-bit capstan up/down counter 14 that is clocked by the capstan tachometer pulses via line 16 and a reference clock is applied to an 8-bit reference up/down counter 18 via line 20. The output of the counter 14 is applied to a summing circuit 22 via lines 24 and the count of the counter 18 is applied to the summing circuit 22 via lines 26. The summing circuit effectively measures the difference between the counts of the counters and provides a difference signal on lines 28 which extend to a digital-to-analog converter 30 that provides an analog error signal on line 32 which is applied to the capstan servo circuit. When the capstan is moving forwardly, line 34 controls the up/down counter so that it is incremented. The line 34 also controls a switch 36 which is connected to a line 38 that enables the counter to operate. Reference counter 18 also has an up/down control line 40 which is set to cause the counter to count down when the capstan is going forwardly and it also controls a switch 42 that has line 44 connected to the enable line of the counter 18. The summing circuit provides a nominal output count that is preferably at one-half of its range, i.e., count 127, which is applied to the digital-to-analog converter 30 to provide a zero voltage output indicating zero error when the sum between the digital values on lines 24 and 26 is a count 127.

When the capstan servo is provided with a signal to begin acceleration of the tape, the capstan tachometer signal which clocks the capstan counter will cause it to begin counting upwardly, but by virtue of the fact that the tape is starting from a stop position and must accelerate up through the normal velocity, the reference counter 18 will be counting down at a rate that is initially faster than the rate of the capstan tachometer which clocks the counter 14. Thus, counter 18 will count downwardly faster than the capstan counter 14 counts upwardly and the summing circuit 22 will have a net count less than 127, which is applied to the digital-to-analog converter 30, which outputs a corresponding negative analog signal to the amplifier 349. As the capstan accelerates to a velocity that exceeds normal velocity, i.e., the overshoot area shown in Figure 2 by the reference numeral 12, the capstan tachometer will clock the counter 14 more rapidly than the reference clock on line 20 clocks the down counter 18 and the summing circuit 22 will count upwardly and the number applied to the digital-to-analog converter 30 will produce an error signal on line 32 that will cause it to reduce the rate of acceleration until the desired velocity is achieved. When this occurs, the summing circuit will provide a nominal output on lines 28 which will cause a zero output voltage to be produced on line 32.

Line 32 is also applied to an input of a comparator 46 as well as to another comparator 48, with the comparator 46 having a positive reference voltage applied to its other input, and similarly, comparator 48 has a negative reference applied thereto. If the limit of the summing circuit 22 is reached either in the positive or negative direction, then it is preferred that the counter which is causing the range to be reached be disabled, since it is not achieving any useful purpose. If the level of the analog error signal on line 32 exceeds the reference voltage in the positive direction, then comparator 46 will have its normally low output line 50 go high which will disable the counter 18. Similarly, if the value on line 32 exceeds the negative reference voltage in the negative direction as determined by comparator 48, then its normally low output 52 will go high and it will disable the capstan counter 14. If the capstan is moved in the reverse direction, then switches 36 and 42 are switched to the opposite position than that shown and the comparators will be effective to switch the opposite counters as is apparent.

The phase versus voltage characteristic of the capstan servo is shown in Figure 5 and is generally linear through its effective range which extends from the positive reference value to its negative reference value which are the reference values that are applied to the inputs of the comparators 46 and 48 previously described. When the servo is operating normally, the output will generally be an incremental voltage having a variable duty cycle that reflects the count difference output of the summing circuit 22. If the count difference corresponds to the nominal count of 127, then there will be zero output as shown in the graph of Figure 5. If it increases by a single count, then a small amount of current will be provided at output line 32 which will be applied until a response by the capstan changes the counter values to return the summation circuit 22 output back to count 127.

As previously mentioned, the apparatus is particularly adapted to stop the transport of the tape with the control track transitions precisely located relative to the nominal plane of rotation of the rotary video reproduce head when the tape transport is stopped incident to a stop command that is provided while the apparatus is operating in a noncontrol track locked condition, such as would occur when the machine is in a shuttle mode, a variable velocity slow motion reproducing mode or in a jog mode. When the machine is provided with a stop command from a noncontrol track locked operating mode condition, a circuit operates to stop the tape in the manner described so that responsive to a nominal velocity reproduce command, the tape will be accelerated in a control track locked condition. The circuitry which accomplishes the stopping of the tape in its preferred position is illustrated in the block diagram of Figure 7 and is conveniently referred to as the stop servo circuitry. The basic capstan servo circuitry includes a sample and hold circuit which operates in a generally conventional manner in that it includes a ramp generator which generates a ramp waveform that is reset by control track transitions and the ramp is sampled at a predetermined time determined by the reference vertical signal. An error signal is generated by detecting the level of the ramp at the sample time. The stop servo circuit embodied in the present invention utilizes the sample and hold output for the purpose of adjusting the position of the tape after it has stopped so that the control track transitions are located precisely relative to the nominal plane of rotation of the rotary video reproduce head after termination of the operation of the stop servo circuit.

Thus, as shown in Figure 7, the sample and hold output is applied on line 60 and it is in turn applied through a resistor 62 to the input 64 of an integrator 66 which integrates a negative error positively and a positive error negatively. The output of the integrator appears on line 68 which is provided to the input of two comparators 70 and 72, the comparator 70 having a positive reference voltage applied at the other input thereof, the integrator 72 having a negative reference voltage applied to the other input thereof. The comparators function as oscillator circuits to provide pulses to the capstan servo together with a directional signal, to cause the capstan servo to move the tape one or more incremental distances so that the tape is properly positioned with a control track transition located relative to said nominal plane of rotation in the same manner as would occur if the tape were brought to a stop under a control track locked condition. Thus, comparator 70 has output line 74 which becomes active if the output of the integrator applied on line 68 exceeds the positive reference voltage coupled to the other input of the comparator. The line 74 extends to resistor 76 which by line 64 is coupled to the input of the integrator; thus when line 74 is active, the output signal of the integrator on line 68 is reduced. When it has been reduced to a level below the reference voltage, the comparator output will then switch low and the integrator is then subject to the level on the sample and hold line 60. If the sample and hold level still remains low, then the comparator 70 is again switched to repeat the sequence.

The output of the integrator 68 is also applied to the comparator 72 which has a negative reference voltage applied at its other input. The output line 78 becomes high if the value of the integrated output exceeds the reference value in the negative direction. By virtue of inverter 80, a low signal will be created on line 82 and this signal will be applied through resistor 84 to line 64 and the input of the integrator 66. Lines 74 and 78 are also applied to the input of an OR gate 86 which provides on line 88 the oscillatory output which is applied to the capstan servo circuitry via the reference counter 18 of Figure 6; the circuitry of Figure 6 causes the capstan to move the tape forward and eventually to the desired position. The direction of the movement is controlled by lines 74 and 78; these lines are applied to the set and reset terminals of a flip-flop 90 and the level of the flip-flop Q output on line 92 determines the direction of capstan movement. This is done by controlling the up/down line of the reference counter 18 to either increment or decrement the counter in accordance with the direction of movement that is desired of the capstan. The values of the reference voltages applied to the comparators 70 and 72 are determined to provide the appropriate degree of accuracy and by placing the comparator reference voltage values appropriately, there will not be any pulses produced on the line 88 if the tape is in the proper position. Stated in other words, the stop servo circuitry generates capstan tachometer pulses together with direction signals that are based upon the timing between the reference vertical and the off tape vertical in order to properly position the tape via the capstan phase comparator, i.e., position the tape so that the capstan tach error will be zero.

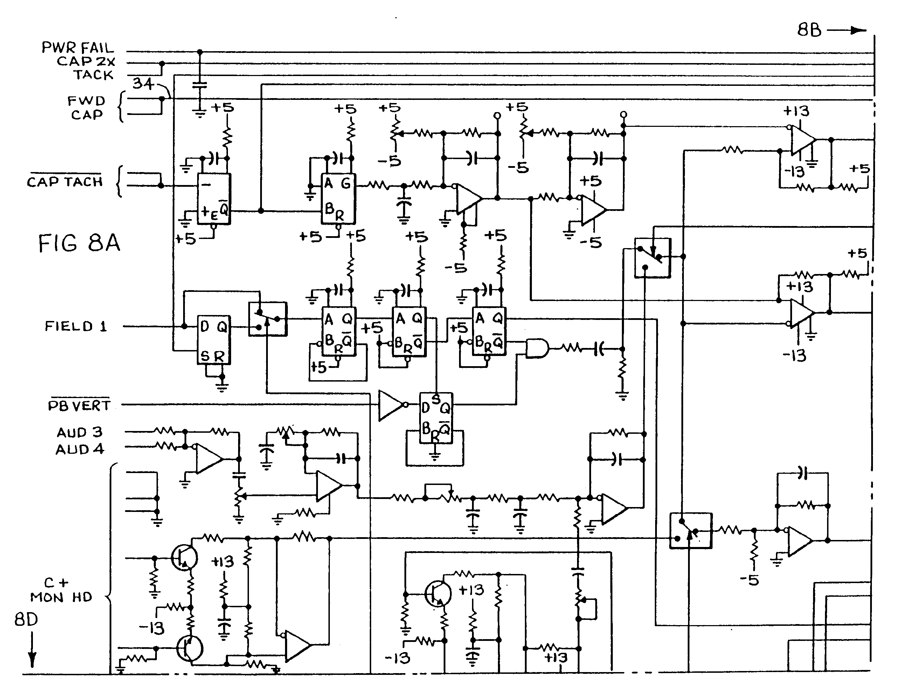

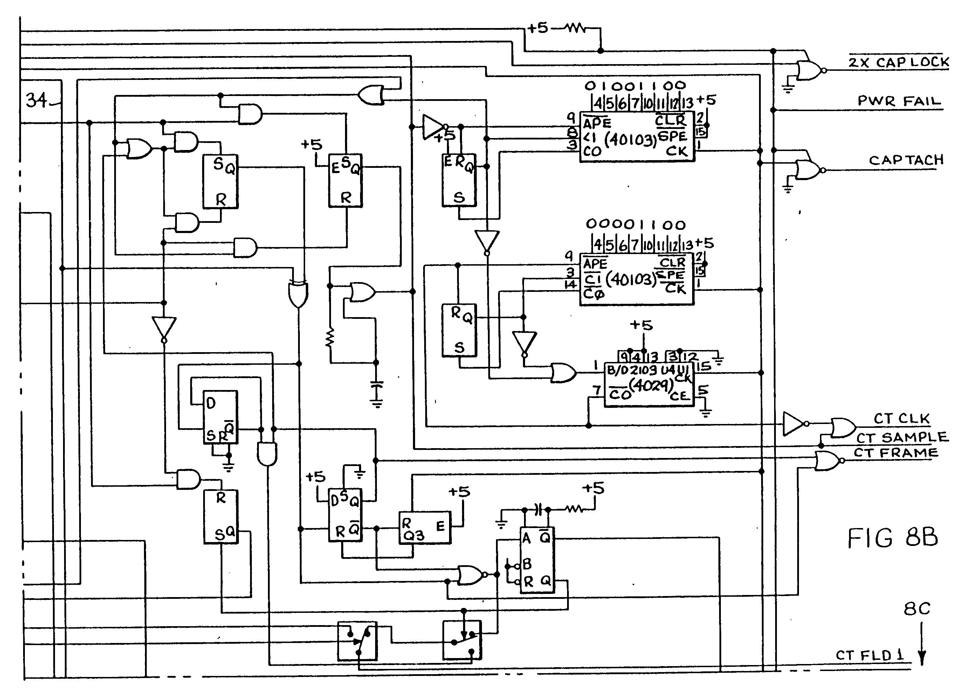

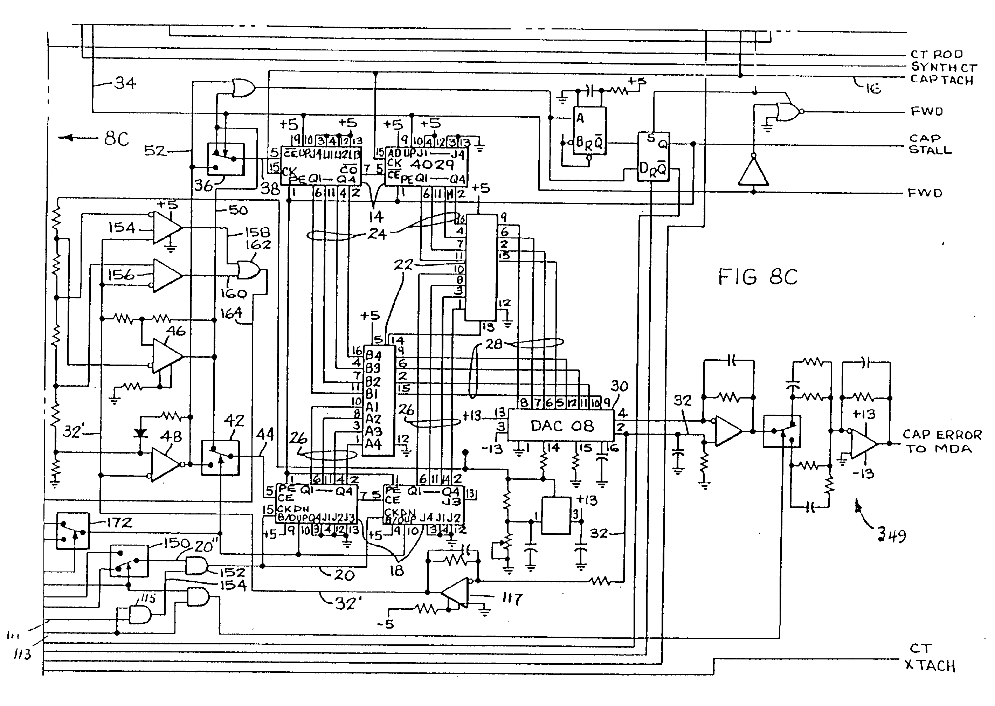

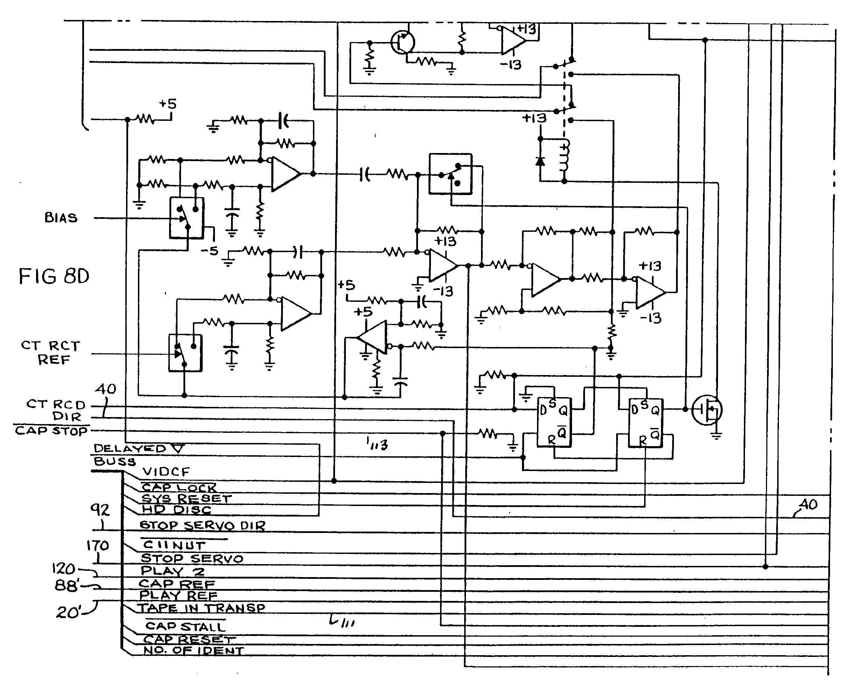

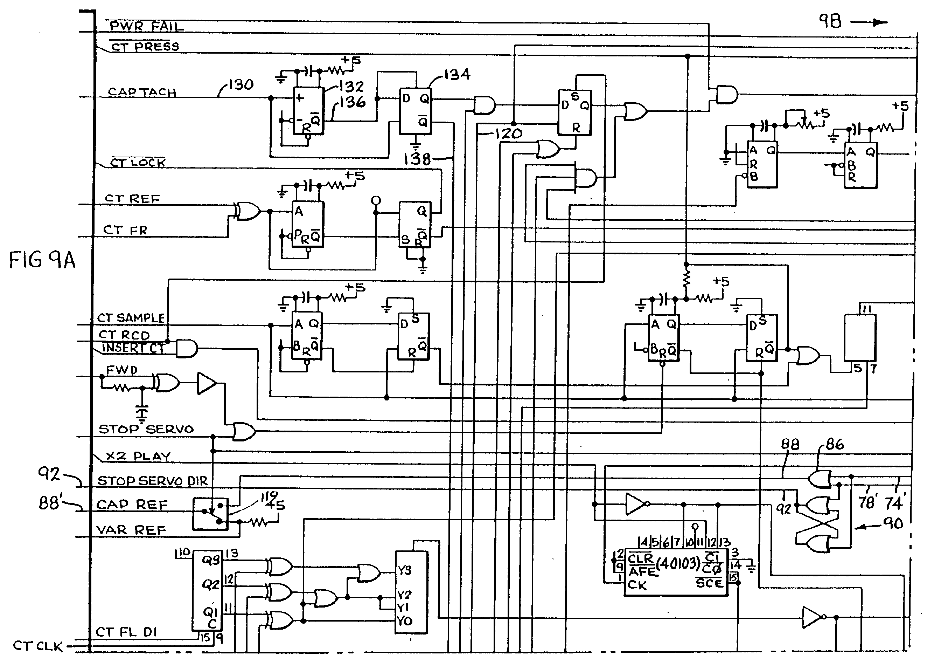

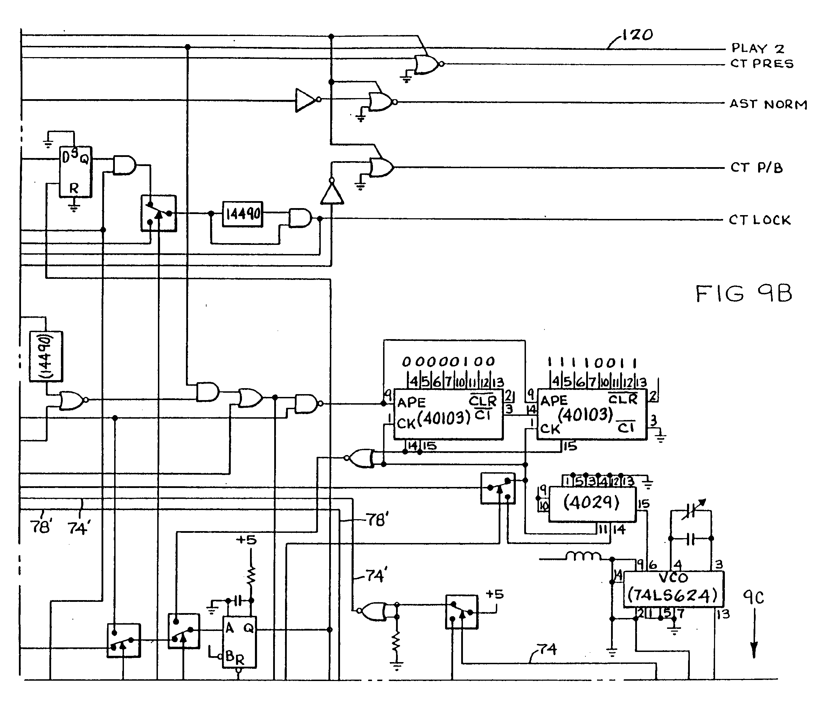

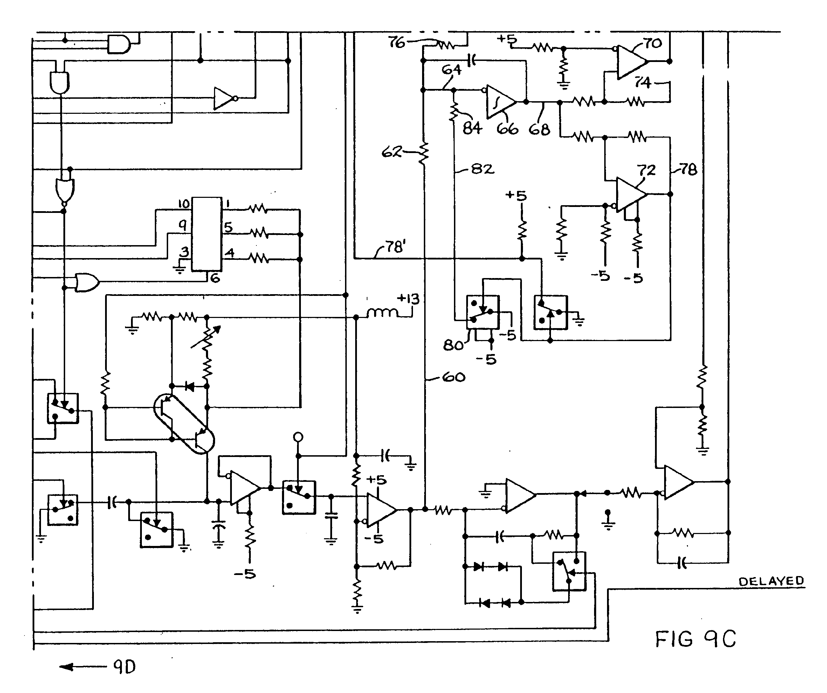

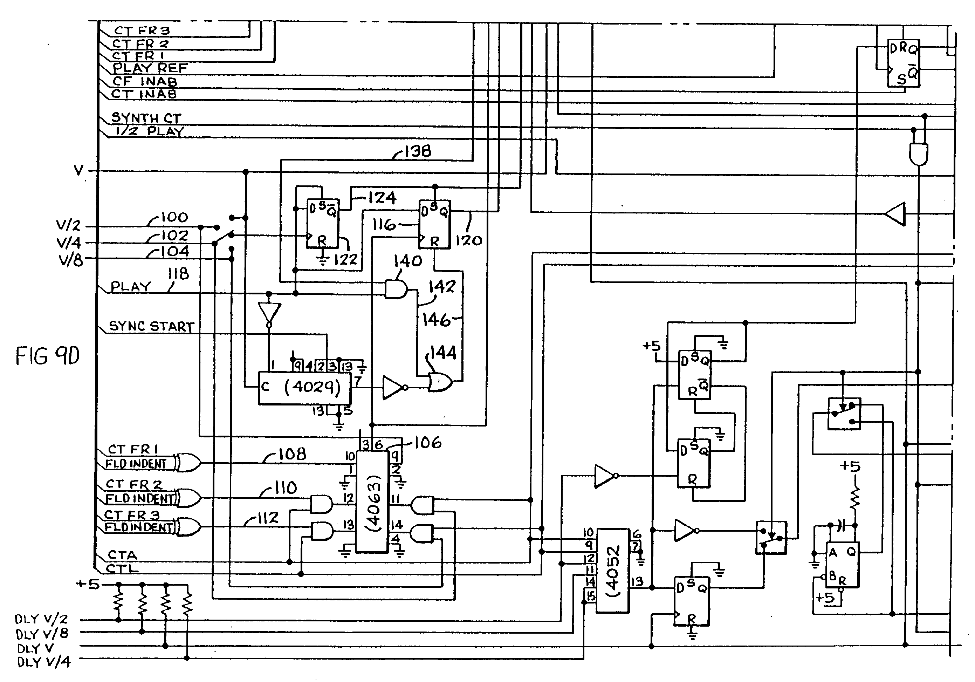

The detailed circuitry which carries out the operation described with respect to the block diagrams of Figures 6 and 7 is shown together with the entire capstan servo circuitry in Figures 8 and 9. The entire capstan servo circuitry will not be described in detail herein, nor will the detailed operation of the portions of the circuitry that comprise the present invention, except insofar as it is necessary to provide an understanding of the operation of the present invention.

Turning initially to the circuitry which provides a field match, reference is made to Figure 9(D) which includes reference signals, namely the reference vertical sync divided by two on line 100, reference vertical sync divided by four on line 102, and reference vertical sync divided by eight on line 104, which lines are extended to inputs of a 4-bit comparator 106. Field identification signals are also applied to the comparator 106 via lines 108, 110 and 112. The detailed circuitry shown in Figure 9 is adapted for use with a video information signal of the NTSC format as well as a PAL format signal. In the event the machine is operating with a NTSC signal, then lines 104 and 112 will not be utilized inasmuch as only a four field sequence exists with a NTSC format system. The signals on line 108 and 110 are binary signals which indicate the particular field of a four field sequence and are obtained from conventional circuitry that in and of itself is not part of the present invention and can be conventional. The signal level on line 108 defines whether the field being reproduced by the machine is an odd or even frame and the signal level on line 110 defines whether it is an odd or even field.

During still field reproducing the signal levels on lines 108 and 110 will be static inasmuch as the same field is being successively reproduced. If the tape is being moved so that successively recorded tracks (fields) are being reproduced, then the levels on lines 108 and 110 will change as different fields in the fourth field sequence are reproduced. With respect to the reference signals on lines 100 and 102, these reflect the field identification information from the station reference and are constantly changing.

Whenever the signal levels on lines 100 and 102 as applied to the comparator 106 are identical to the signal levels on lines 108 and 110 for a NTSC format system, there will be a field match signal generated; output line 114 will go high and will clock a D flip-flop 116 which has a play command in the form of a high level signal applied on line 118 from the machine control system. This high level play command will be clocked through the flip-flop 116 onto line 120 which activates the capstan servo to begin accelerating the tape up to normal reproduce velocity. The play command is generated by other circuitry in response to an operator placing the machine into normal play mode and from the description of the field match circuitry it should be appreciated that the play command is not applied to the capstan servo circuitry until a field match signal is produced by the comparator which clocks the play command through the flip-flop 116 onto line 120 which is identified as a "play 2" for application to the capstan servo circuitry. The above-described circuitry effectively delays the play command to the servo, which activates the same to accelerate the tape, until a field match is obtained so that color framing is achieved before the tape moves.

When the machine is operating at normal play velocity and is subsequently given a stop command, the phase comparator of Figure 6 will also stop the tape with control track transitions positioned at known locations relative to the nominal plane of rotation of the rotary video reproduce head, as is desired. Since the tape is transported under control track lock during conditions this normal play mode, the circuitry of Figure 9(D) operates to activate the phase comparator circuit and stop the tape on field one for a NTSC system in the following manner. The V/4 signal on line 102 is applied to the clock input of a flip-flop 122, the D input of which is supplied by the signal on line 118, i.e., the play command. When tape transport stop is commanded, the line 118 is switched to provide a low signal to the D input of flip-flop 122 which is clocked by the signal on line 102 and its output on line 124 sets the flip-flop 116 which causes the play 2 command on line 120 to be switched low (and thereby terminate).

If the machine is operating in a slow motion reproducing mode at a relatively slow velocity, it should be appreciated that a field match condition signal may be generated by the comparator 106 and the play command will be clocked through the flip-flop 116 in the manner as previously described. However, as the velocity of the capstan increases, the reference and reproduced video related field identification signals on line 108 and 110 will gradually approach one another and it will take longer for a field match signal to be generated by the comparator 106. When the slow motion velocity exceeds approximately one-half normal play velocity, it is desirable to not utilize the field match to clock the play command to the capstan servo. The circuitry of Figures 9(A) and 9(D) effectively gate the play command immediately to the capstan servo rather than wait for a field match signal to be generated. This is accomplished by the capstan tachometer signal on line 130 being applied to a one-shot 132 in addition to the clock input of a D flip-flop 134 so that if the output of the one-shot 132 appearing on line 136 fails to time out prior to the occurrence of a subsequent tachometer pulse, the D input of the flip-flop 134 will remain low. This low state will be clocked through the flip-flop 134 providing a high signal on the output line 138 that is applied to an AND gate 140. Thus high signal is ANDed with the play command to raise output line 142 to go high. This high state will be gated through OR gate 144 onto line 146 which will reset the flip-flop 116 and provide the play 2 command on line 120 which will cause the capstan servo to be activated.

Turning now to the phase comparator circuitry shown in detail in Figures 8(D) and 8(C), the play 2 command on line 120 is applied to the lower left portion of the circuitry of Figure 8(D). This line 120 extends to a switch 150 which causes it to move to the position as shown, wherein reference clock signals from input line 20′ are applied to line 20˝ and are gated through AND gate 152 to line 20 for clocking the reference counter 18. The tape transport command and capstan non-stopped signal are received on lines 111 and 113. The AND gate 152 is enabled by line 154 when the tape is in transport and the reel servo is active. Thus, when the play 2 command is generated, the reference counter 18 (Figures 6 and 8(C)) will begin counting and will cause an error signal to be generated by the summing circuit 22 since the capstan is not moving at that instant. After the capstan has accelerated the tape up to the normal play velocity, the error signal on line 32 will become zero. The line 32 is coupled to an amplifier 117 of which the output is coupled by line 32′ to the comparators 46 and 48 and also to comparators 154 and 154 which provide a small tolerance comprison so that when the capstan is essentially running at normal velocity, the output lines 158 and 160 will be switched low and an OR gate 162 will provide a low signal on line 164 indicating that the capstan is locked at the normal play velocity.

The detailed schematic diagrams of the stop servo circuitry is largely shown in Figures 9(C) and 9(B). When the machine control circuitry detects that the capstan servo is to be stopped from a noncontrol track locked mode of operation, a stop servo command signal is applied via line 170 shown in the lower left portion of Figure 8(B) and this signal switches a switch 172 to its alternate position (not shown) whereby the stop servo direction signal on line 92 is applied to control the up/down reference counter 18 and stop servo pulses are applied via the line 88′. The pulses are applied through the switch 150 which is placed in the alternate position (not shown) so that these pulses are applied to clock the up/down reference counter 18. In this manner, the phase comparator circuitry will effectively cause the error signals to be generated to reposition the tape as previously described.

It should also be appreciated, although it has not been specifically stated, that when the tape is properly located as previously described, the tracks are positioned relative to the reproducing head so that the movable element that carries the transducing head is in its optimum position whereby the automatic scan tracking servo can utilize its full dynamic range. This enables it to follow the track during subsequent acceleration in a manner as has been described with respect to the diagram of Figure 3. since the automatic scan tracking servo will attempt to have the head follow the track, if the position of the track is such that the movable element is already extended through a substantial portion of its dynamic range, then it may be unable to deflect a sufficient amount whereby it will not maintain appropriate tracking. The stop servo effectively places the tape so that the automatic scan tracking will function properly during subsequent acceleration to play velocity as is desired.

From the foregoing, it should be appreciated that a significantly improved capstan servo system and associated circuitry have been described which enables superior performance of a recording and reproducing machine. The apparatus of the present invention permits color frame synchronization to be accomplished responsive to a play command from a still field reproducing mode almost instantaneously. Moreover, the stop servo circuitry of the present invention automatically operates to correctly position the tape when the machine is stopped from a noncontrol track locked operating mode.

## Claims

1. Apparatus for changing in response to a velocity change command signal the velocity of transport of a tape from an initial velocity to a substantially different, selected velocity, the apparatus including means (340,353) for providing a system reference timing signal identifying periodically occurring intervals and a timing signal indicative of the rate of reproduction of information recorded on the tape relative to the system reference timing signal, the said timing signal identifying periodically occurring intervals, which correspond to the periodically occurring intervals defined by said system reference timing signal and from which tape transport velocity can be determined; a rotary magnetic head (402) located at a position relative to the transported tape for reproducing the recorded information signals; and means (14,18,22, 106,116,150,343,345,347) for controlling the velocity of transport of the tape in response to the velocity change command signal; characterised in that the said means for controlling controls the transport of the tape during the velocity change interval in accordance with the system reference timing signal and said timing signal such that at least at the end of the velocity change interval there is a selected timing relationship between the system reference signal and the said timing signal and the net displacement of the tape at the end of said velocity change interval is proportional to the product of the velocity change and the velocity change interval.

2. Apparatus according to claim 1 wherein the the said selected timing relationship includes a coincidence of a distinct interval in the periodically occurring intervals of the system reference timing signal and a corresponding distinct interval in the periodically occurring intervals of the said timing signal.

3. Apparatus according to claim 1 wherein the tape has an information signal recorded thereon, which information signal contains a timing component constituting said timing signal, and further comprising means (200) for detecting the selected timing relationship between the system reference timing signal and the timing component contained in the reproduced information signal and generating said command signal.

4. Apparatus according to claim 1 further comprising means (22) for maintaining a number equal to a difference in intervals between said system reference timing signal and said timing signal during the velocity change interval, and wherein said velocity controlling means is operative to terminate said velocity change interval when the tape is at said selected velocity and the number maintained by said difference retaining means is zero.

5. Apparatus according to any foregoing claim wherein the initial velocity of transport of the tape at the generation of said command signal is less than said selected velocity, and said velocity controlling means is arranged to increase tape velocity to a value greater than said selected velocity during the velocity change interval.

6. Apparatus according to claim 5 wherein said initial velocity is zero.

7. Apparatus according to any of claims 1 to 4 wherein the initial velocity of transport of the tape at the generation of said command signal is greater than said selected velocity, and said velocity controlling means is arranged for decreasing the tape velocity to a value less than said selected velocity during the velocity change interval.

8. Apparatus according to any of claims 1 to 4 wherein the initial velocity of transport of the tape at the generation of said command signal is opposite in direction to said selected velocity, and said velocity controlling means is arranged for changing tape transport velocity to a value greater in magnitude and equal in direction to said selected velocity during the velocity change interval.

9. Apparatus according to any of claims 1 to 4 wherein the velocity of the tape is reduced from a initial non-zero velocity to a zero velocity, and further comprising means for adjusting the position of the tape at zero velocity for alignment of a selected one of said recorded information signals with the rotary magnetic head.

10. Apparatus according to claim 1 and arranged for changing the velocity of the tape to a normal velocity at which video information is reproduced from the tape, the initial velocity being substantially less than the said normal velocity, the video information including picture information in a recurring sequence of a plurality of distinct field intervals and field identification information identifying each distinct field interval of each sequence, the tape being driven by a capstan and transported in a helical path about a tape guide as video information recorded along tracks on the tape is reproduced by at least one rotating transducing head, said apparatus including means (106) for comparing the field identification information (108-112) included in the video information reproduced from the tape with corresponding reference field identification information (100-104) identifying distinct reference field intervals of a recurring sequence of a plurality of distinct reference field intervals and generating a match signal when the compared field identification information identify a coincidence of a distinct field interval of video information reproduced from the tape and a corresponding distinct reference field interval occurring in the sequence of distinct reference field intervals, the generation of the match signal (114) enabling the application of the command signal to the capstan.

11. Apparatus according to claim 10 wherein said initial velocity is less than approximately one-half the said normal velocity.

12. Apparatus according to claim 10 or claim 11 wherein said comparing means (106) comprises a multi-bit binary comparator, said field identification information is a first binary signal applied to one input of said comparator and said reference video field identification information is a second binary signal applied to a second input of said comparator, said comparator providing the match signal in response to said binary signals representing the same binary number.

13. Apparatus according to any of claims 10 to 12 and further comprising a flip-flop (116) having a clock input and a signal input, the clock input coupled to receive the match signal (114) and the signal input coupled to receive a velocity change command signal (118), said flip-flop coupling the velocity change command to enable driving of the capstan when clocked by said match signal.

14. Apparatus according to any foregoing claim wherein the rotating head (402) is mounted on a movable element for displacing the transducing head transversely relative to the longitudinal direction of the tracks of video information, and further comprising means for controlling the movable element during the change in the velocity of tape transport to cause the transducing head to follow the recorded tracks of video information consecutively in succession.

15. A method of changing the velocity of transport of a tape from an initial velocity to a normal velocity at which video information is reproduced from the tape, the initial velocity being substantially different from the normal velocity, the tape being driven by a servo-controlled capstan and transported in a helical path about a tape guide as video information recorded along tracks on the tape is reproduced by at least one rotating transducing head (402), there being a system reference timing signal identifying periodically occurring intervals and a timing signal indicative of the rate of reproduction of information recorded on the tape relative to the reference timing signal, the said timing signal identifying periodically occurring intervals, which correspond to the periodically occurring intervals defined by said system reference timing signal and from which tape transport velocity can be determined, characterised in that during an interval of velocity change between the initial velocity and the normal velocity the transport of the tape is controlled in accordance with the system reference timing signal and said timing signal, such that at least at the end of the velocity change interval there is a selected timing relationship between the system reference timing signal and the said timing signal and the net displacement of the tape at the end of said velocity change interval is proportional to the product of the velocity change and the velocity change interval.

16. A method according to claim 15 wherein the selected timing relationship is maintained throughout the velocity change interval.

17. A method according to claim 15 and further comprising maintaining a number equal to a difference in intervals between said system reference timing signal and said timing signal during the velocity change interval; and wherein the velocity change interval is terminated when the tape is at said selected velocity and the number maintained by said difference retaining means is zero.

18. A method according to any of claims 15 to 17 wherein the video information includes picture information in a recurring sequence of a plurality of distinct field intervals and field identification information identifying each distinct field interval of each sequence, and the method further comprises comparing the field identification information in the video information reproduced from the tape with reference field identification information identifying each distinct reference field interval of each recurring sequence of a plurality of distinct reference field intervals, the distinct reference field intervals occurring at a stable rate and the recurring sequence thereof corresponding to the recurring sequence of distinct field intervals of video information, and activating said capstan to change the velocity of the tape transport from the predetermined velocity to the normal velocity when the compared field identification information identify a coincidence of a distinct field interval of video information reproduced from the tape and a corresponding distinct reference field interval occurring in the sequence of distinct reference field intervals.

19. A method as claimed in claim 18 wherein the capstan is activated to change the velocity of the tape transport when a coincidence occurs with respect to a particular reference field interval of the sequence of distinct reference field intervals.

20. A method according to claim 18 wherein said video information is a NTSC color video information signal and said recurring sequence of a plurality of distinct field intervals comprises four consecutive fields.

21. A method according to claim 18 wherein said video information is a PAL colour video information signal and said recurring sequence of a plurality of distinct fields comprises eight consecutive fields.

22. A method according to claim of claims 15 to 21 wherein the rotating head is controlled by a head tracking position servo to follow tracks as video information is reproduced therefrom at various velocities of tape transport, the method further comprising the step of activating the head tracking position servo during the velocity change interval to cause the head to follow the recorded tracks of video information consecutively in succession.

## Patentansprüche

1. Anordnung zur Änderung der Transportgeschwindigkeit eines Bandes von einer Anfangsgeschwindigkeit auf eine im wesentlichen unterschiedliche ausgewählte Geschwindigkeit in Abhängigkeit von einem Geschwindigkeitsänderungs-Befehlssignal enthaltend Mittel (340, 353) zur Bereitstellung eines periodisch auftretende Intervalle identifizierenden Systembezugs-Zeittaktsignals sowie eines Zeittaktsignals, das die Wiedergaberate von auf dem Band aufgezeichneter Information relativ zum Systembezugs-Zeittaktsignal identifiziert, wobei das Zeittaktsignal periodisch auftretende Intervalle identifiziert, welche den durch das Systembezugs-Zeittaktsignal definierten periodisch auftretenden Intervallen entsprechen und aus denen die Bandtransportgeschwindigkeit bestimmt werden kann; einen rotierenden Magnetkopf (402), der zur Wiedergabe der aufgezeichneten Informationssignale an einer Stelle relativ zum transportierten Band angeordnet ist; und Mittel (14, 18, 22, 106, 116, 150, 343, 345, 347) zur Steuerung der Transportgeschwindigkeit des Bandes in Abhängigkeit vom Geschwindigkeitsänderungs-Befehlssignal; **dadurch gekennzeichnet,** daß die Steuermittel den Bandtransport während des Geschwindigkeitsänderungsintervalls in Abhängigkeit vom Systembezugs-Zeittaktsignal und dem Zeittaktsignal derart steuern, daß wenigstens am Ende des Geschwindigkeitsänderungsintervalls ein ausgewählter Zeittaktzusammenhang zwischen dem Systembezugssignal und dem Zeittaktsignal vorhanden ist und die reine Verschiebung des Bandes am Ende des Geschwindigkeitsänderungsintervalls proportional zum Produkt aus der Geschwindigkeitsänderung und dem Geschwindigkeitsänderungsintervall ist.

2. Anordnung nach Anspruch 1, in welcher der ausgewählte Zeittaktzusammenhang eine Koinzidenz eines bestimmten Intervalls in den periodisch auftretenden Intervallen des Systembezugs-Zeittaktsignals und eines entsprechenden bestimmtes Intervalls in den periodisch auftretenden Intervallen des Zeittaktsignals enthält.

3. Anordnung nach Anspruch 1, in der auf dem Band ein Informationssignal aufgezeichnet ist, das eine das Zeittaktsignal bildende Zeittaktkomponente enthält, und weiterhin umfassend Mittel (200) zur Detektierung des ausgewählten Zeittaktzusammenhangs zwischen dem Systembezugs-Zeittaktsignal und der im wiedergegebenen Informationssignal enthaltenen Zeittaktkomponente und Erzeugung des Befehlssignals.

4. Anordnung nach Anspruch 1, weiterhin umfassend Mittel (22) zur Aufrechterhaltung einer Zahl, welche einer Differenz in Intervallen zwischen dem Systembezugs-Zeittaktsignal und dem Zeittaktsignal während des Geschwindigkeitsintervalls gleich ist, und in der die Geschwindigkeitssteuermittel im Sinne der Beendigung des Geschwindigkeitsänderungsintervalls wirken, wenn das Band die ausgewählte Geschwindigkeit besitzt und die durch die Differenzaufrechterhaltungsmittel aufrechterhaltene Zahl gleich Null ist.

5. Anordnung nach den vorhergehenden Ansprüchen, in der die Anfangstransportgeschwindigkeit des Bandes bei der Erzeugung des Befehlssignals kleiner als die ausgewählte Geschwindigkeit ist und die Geschwindigkeitssteuermittel zur Erhöhung der Bandgeschwindigkeit auf einen Wert ausgebildet sind, welcher größer als die ausgewählte Geschwindigkeit während des Geschwindigkeitsänderungsintervalls ist.

6. Anordnung nach Anspruch 5, in der die Anfangsgeschwindigkeit gleich Null ist.

7. Anordnung nach den Ansprüchen 1 bis 4, in der die Anfangstransportgeschwindigkeit des Bandes bei der Erzeugung des Befehlssignals größer als die ausgewählte Geschwindigkeit ist und die Geschwindigkeitssteuermittel zur Verringerung der Bandgeschwindigkeit auf einen Wert ausgebildet sind, der kleiner als die ausgewählte Geschwindigkeit während des Geschwindigkeitsänderungsintervalls ist.

8. Anordnung nach den Ansprüchen 1 bis 4, in der die Anfangstransportgeschwindigkeit des Bandes bei der Erzeugung des Befehlssignals der Richtung der ausgewählten Geschwindigkeit entgegengesetzt ist und die Geschwindigkeitssteuermittel zur Änderung der Bandtransportgeschwindigkeit auf einen Wert ausgebildet sind, der größer als die ausgewählte Geschwindigkeit und in der Richtung gleich der ausgewählten Geschwindigkeit während des Geschwindigkeitsänderungsintervalls ist.

9. Anordnung nach den Ansprüchen 1 bis 4, in der die Geschwindigkeit des Bandes von einer von Null verschiedenen Anfangsgeschwindigkeit auf eine Geschwindigkeit von Null reduziert wird und weiterhin umfassend Mittel zur Einstellung der Stellung des Bandes bei der Geschwindigkeit Null zwecks Ausrichtung eines ausgewählten Signals der aufgezeichneten Informationssignale zum rotierenden Magnetkopf.

10. Anordnung nach Anspruch 1 ausgebildet zur Anderung der Bandgeschwindigkeit auf eine Normalgeschwindigkeit, bei der Videoinformation vom Band wiedergegeben wird, wobei die Anfangsgeschwindigkeit im wesentlichen kleiner als die Normalgeschwindigkeit ist, die Videoinformation Bildinformation in einer periodisch wiederkehrenden Folge einer Vielzahl von bestimmten Teilbildintervallen und Teilbildidentifizierungsinformation enthält, die jedes bestimmte Teilbildintervall jeder Folge identifiziert und das Band durch einen Bandantrieb angetrieben und in einem schraubenförmigen Weg um eine Bandführung transportiert wird, wenn Längsspuren auf dem Band aufgezeichnete Videoinformation durch wenigstens einen rotierenden Wandlerkopf wiedergegeben wird, enthaltend Mittel (106) zum Vergleich der in der vom Band wiedergegebenen Videoinformation enthaltenen Teilbildidentifizierungsinformation (108-112) mit entsprechender Bezugs-Teilbildidentifizierungsinformation (100-104), welche bestimmte Bezugsteilbildintervalle einer periodisch wiederkehrenden Folge einer Vielzahl von bestimmten Bezugsteilbildintervallen identifiziert, sowie zur Erzeugung eines Anpassungssignals, wenn die verglichene Teilbildidentifizierungsinformation eine Koinzidenz eines bestimmten Teilbildintervalls der vom Band wiedergegebenen Videoinformation und eines entsprechenden bestimmten Bezugsteilbildintervalls identifiziert, das in der Folge von bestimmten Bezugsteilbildintervallen auftritt, wobei die Erzeugung des Anpassungssignals (114) die Eingabe des Befehlssignals in den Bandantrieb freigibt.

11. Anordnung nach Anspruch 10, in der die Anfangsgeschwindigkeit kleiner als etwa die halbe Normalgeschwindigkeit ist.

12. Anordnung nach Anspruch 10 oder 11, in der die Vergleichsmittel (106) einen Mehrbit-Binärkomparator umfassen, die Teilbildidentifizierungsinformation ein erstes in einen Eingang des Komparators eingegebenes Binärsignal und die Bezugs-Videoteilbildidentifizierungsinformation ein zweites in einen zweiten Eingang des Komparators eingespeistes Binärsignal ist und der Komparator das Anpassungssignal in Abhängigkeit von den die gleiche Binärzahl repräsentierenden Binärsignalen liefert.

13. Anordnung nach den Ansprüchen 10 bis 12, weiterhin umfassend ein Flip-Flop (116) mit einem Takteingang und einem Signaleingang, bei dem der Takteingang zur Aufnahme des Anpassungssignals (114) und der Signaleingang zur Aufnahme eines Geschwindigkeitsänderungs-Befehlssignals (118) gekoppelt ist, wobei das Flip-Flop den Geschwindigkeitsänderungsbefehl zur Freigabe der Ansteuerung des Bandantriebs bei Taktung durch das Anpassungssignal koppelt.

14. Anordnung nach den vorhergehenden Ansprüchen, in welcher der rotierende Kopf (402) auf einem beweglichen Element zu seiner Verschiebung quer relativ zur Längsrichtung der Videoinformationsspuren montiert ist und weiterhin umfassend Mittel zur Steuerung des beweglichen Elementes während der Änderung der Bandtransportgeschwindigkeit, um den Wandlerkopf den aufgezeichneten Videoinformationsspuren in aufeinanderfolgender Reihenfolge folgen zu lassen.

15. Verfahren zur Änderung der Transportgeschwindigkeit eines Bandes von einer Anfangsgeschwindigkeit auf Normalgeschwindigkeit, bei der Videoinformation vom Band wiedergegeben wird, die Anfangsgeschwindigkeit sich im wesentlichen von der Normalgeschwindigkeit unterscheidet, das Band durch einen servogesteuerten Bandantrieb angetrieben und in einem schraubenförmigen Weg um eine Bandführung transportiert wird, wenn längs Spuren auf dem Band aufgezeichnete Videoinformation durch wenigstens einen rotierenden Wandlerkopf (402) wiedergegeben wird, ein periodisch auftretende Intervalle identifizierendes Systembezugs-Zeittaktsignal und ein Zeittaktsignal vorhanden sind, wobei das Zeittaktsignal die Wiedergaberate von auf dem Band aufgezeichneter Information relativ zum Bezugszeittaktsignal und periodisch auftretende Intervalle identifiziert, welche den periodisch auftretenden Intervallen entsprechen, die durch das Systembezugs-Zeittaktsignal definiert sind und aus denen die Bandtransportgeschwindigkeit bestimmt werden kann, **dadurch gekenn-zeichnet**, daß während eines Geschwindigkeitsänderungsintervalls zwischen der Anfangsgeschwindigkeit und der Normalgeschwindigkeit der Bandtransport in Abhängigkeit vom Systembezugs-Zeittaktsignal und dem Zeittaktsignal derart gesteuert wird, daß wenigstens am Ende des Geschwindigkeitsänderungsintervalls ein ausgewählter Zeittaktzusammenhang zwischen dem Systembezugs-Zeittaktsignal und dem Zeittaktsignal vorhanden ist und die reine Verschiebung des Bandes am Ende des Geschwindigkeitsintervalls proportional zum Produkt aus der Geschwindigkeitsänderung und dem Geschwindigkeitsänderungsintervall ist.

16. Verfahren nach Anspruch 15, bei dem der ausgewählte Zeittaktzusammenhang im ganzen über das Geschwindigkeitsänderungsintervall aufrechterhalten wird.

17. Verfahren nach Anspruch 15, weiterhin umfassend die Aufrechterhaltung einer Zahl, welche gleich einer Differenz in Intervallen zwischen dem Systembezugs-Zeittaktsignal und dem Zeittaktsignal während des Geschwindigkeitsänderungsintervalls ist; und bei dem das Geschwindigkeitsänderungsintervall beendet wird, wenn das Band die ausgewählte Geschwindigkeit besitzt und die durch die Differenzaufrecherhaltungsmittel aufrechterhaltene Zahl gleich Null ist.

18. Verfahren nach den Ansprüchen 15 bis 17, bei dem die Videoinformation Bildinformation in einer periodisch wiederkehrenden Folge einer Vielzahl von bestimmten Teilbildintervallen und Teilbildidentifizierungsinformation enthält, welche jedes bestimmte Teilbildintervall jeder Folge identifiziert, und bei dem weiterhin die Teilbildidentifizierungsinformation in der vom Band wiedergegebenen Videoinformation mit Bezugs-Teilbildidentifizierungsinformation verglichen wird, welche jedes bestimmte Bezugsteilbildintervall jeder periodisch wiederkehrenden Folge einer Vielzahl von bestimmten Bezugsteilbildintervallen identifiziert, die bestimmten Bezugsteilbildintervalle mit einer stabilen Folgefrequenz auftreten und deren periodisch wiederkehrende Folge der periodisch wiederkehrenden Folge von bestimmten Teilbildintervallen von Videoinformation entspricht, und der Bandantrieb aktiviert wird, um die Bandtransportgeschwindigkeit von der vorgegebebenen Geschwindigkeit auf die Normalgeschwindigkeit zu ändern, wenn die verglichene Teilbildidentifizierungsinformation eine Koinzidenz eines bestimmten Teilbildintervalls von vom Band wiedergegebener Videoinformation und eines entsprechenden in der Folge von bestimmten Bezugsteilbildintervallen auftretenden bestimmten Bezugsteilbildintervalls identifiziert.

19. Verfahren nach Anspruch 18, bei dem der Bandantrieb aktiviert wird, um die Bandtransportgeschwindigkeit zu ändern, wenn eine Koinzidenz in Bezug auf ein spezielles Bezugsteilbildintervall der Folge von bestimmten Bezugsteilbildintervallen auftritt.

20. Verfahren nach Anspruch 18, bei dem die Videoinformation ein NTSC-Farbvideoinformationssignal ist und die periodisch wiederkehrende Folge einer Vielzahl von bestimmten Teilbildintervallen vier aufeinanderfolgende Teilbilder umfaßt.

21. Verfahren nach Anspruch 18, bei dem die Videoinformation ein PAL-Farbvideoinformationssignal ist und die periodisch wiederkehrende Folge einer Vielzahl von bestimmten Teilbildern acht aufeinanderfolgende Teilbilder umfaßt.

22. Verfahren nach den Ansprüchen 15 bis 21, bei dem der rotierende Kopf durch eine Kopfnachlauf-Stellungsservoeinrichtung gesteuert wird, damit er Spuren folgt, wenn Videoinformation aus diesen mit verschiedenen Bandtransportgeschwindigkeiten wiedergegeben wird, und weiterhin der Schritt der Aktivierung der KopfnachlaufStellungsservoeinrichtung während des Geschwindigkeitsänderungsintervalls vorgesehen ist, um den Kopf den aufgezeichneten Spuren von Videoinformation in sequentieller Reihenfolge folgen zu lasssen.

## Revendications

1. Appareil pour changer, en réponse à un signal de commande de changement de vélocité, la vélocité de transport d'une bande d'une vélocité initiale à une vélocité sélectionnée, sensiblement différente, ledit appareil comprenant des moyens (340, 353) pour fournir un signal de rythme de référence du système identifiant des intervalles apparaissant périodiquement et un signal de rythme représentatif de la vitesse de reproduction d'informations enregistrées sur la bande par rapport au signal de rythme de référence du système, ledit signal de rythme identifiant des intervalles apparaissant périodiquement, qui correspondent aux intervalles apparaissant périodiquement définis par ledit signal de rythme de référence du système et à partir desquels la vélocité de transport de la bande peut être déterminée; une tête magnétique rotative (402) située au niveau d'une position relative à la bande transportée pour reproduire les signaux d'informations enregistrés; et des moyens (14, 18, 22, 106, 116, 150, 343, 345, 347) pour commander la vélocité de transport de la bande en réponse au signal de commande de changement de vélocité; caractérisé en ce que lesdits moyens de commande commandent le transport de la bande pendant l'intervalle de changement de vélocité en fonction du signal de rythme de référence du système et dudit signal de rythme de telle manière que, au moins à la fin dudit intervalle de changement de vélocité, il y ait une relation de rythme sélectionnée entre le signal de référence du système et ledit signal de rythme et que le déplacement net de la bande à la fin de l'intervalle de changement de vélocité soit proportionnel au produit du changement de vélocité et de l'intervalle de changement de vélocité.

2. Appareil selon la revendication 1, dans lequel ladite relation de rythme sélectionnée comprend une coïncidence entre un intervalle distinct dans les intervalles apparaissant périodiquement du signal de rythme de référence du système et un intervalle distinct correspondant dans les intervalles apparaissant périodiquement dudit signal de rythme.

3. Appareil selon la revendication 1, dans lequel un signal d'informations est enregistré sur la bande, ledit signal d'informations contenant une composante de rythme constituant ledit signal de rythme, et comprenant, en outre, des moyens (200) pour détecter la relation de rythme sélectionnée entre le signal de rythme de référence du système et la composante de rythme contenue dans le signal d'informations reproduit et pour générer ledit signal de commande.

4. Appareil selon la revendication 1 comprenant, en outre, des moyens (22) pour maintenir un nombre égal à une différence d'intervalles entre ledit signal de rythme de référence du système et ledit signal de rythme pendant l'intervalle de changement de vélocité, et dans lequel lesdits moyens de commande de vélocité agissent pour mettre fin audit intervalle de changement de vélocité lorsque la bande est à ladite vélocité sélectionnée et que le nombre maintenu par lesdits moyens de maintien de différence est égal à zéro.

5. Appareil selon l'une quelconque des revendications précédentes, dans lequel la vélocité initiale de transport de la bande au moment de la génération dudit signal de commande est inférieure à ladite vélocité sélectionnée, et lesdits moyens de commande de vélocité sont conçus pour augmenter la vélocité de la bande jusqu'à une valeur supérieure à ladite vélocité sélectionnée pendant l'intervalle de changement de vélocité.

6. Appareil selon la revendication 5, dans lequel ladite vélocité initiale est égale à zéro.

7. Appareil selon l'une quelconque des revendications 1 à 4, dans lequel la vélocité initiale de transport de la bande au moment de la génération dudit signal de commande est supérieure à ladite vélocité sélectionnée, et lesdits moyens de commande de vélocité sont conçus pour diminuer la vélocité de la bande jusqu'à une valeur inférieure à ladite vélocité sélectionnée pendant l'intervalle de changement de vélocité.

8. Appareil selon l'une quelconque des revendications 1 à 4 dans lequel la vélocité initiale de transport de la bande au moment de la génération dudit signal de commande est de direction contraire à celle de ladite vélocité sélectionnée, et lesdits moyens de commande de vélocité sont conçus pour changer la vélocité de transport de bande en une vélocité de valeur supérieure en grandeur et égale en direction à ladite vélocité sélectionnée pendant l'intervalle de changement de vélocité.

9. Appareil selon l'une quelconque des revendications 1 à 4, dans lequel la vélocité de la bande est réduite d'une vélocité initiale non nulle à une vélocité nulle, et comprenant, en outre, des moyens pour ajuster la position de la bande à la vélocité nulle afin d'aligner un signal sélectionné parmi lesdits signaux d'informations enregistrés avec la tête magnétique rotative.

10. Appareil selon la revendication 1 et conçu pour changer la vélocité de la bande en une vélocité normale suivant laquelle des informations vidéo sont reproduites à partir de la bande, la vélocité initiale étant sensiblement inférieure à ladite vélocité normale, les informations vidéo comprenant des informations d'image suivant une séquence récurrente d'une multiplicité d'intervalles de trame distincts et des informations d'identification de trame identifiant chaque intervalle de trame distinct de chaque séquence, la bande étant entraînée par un cabestan et transportée suivant un trajet hélicoïdal autour d'un guide de bande lorsque des informations vidéo enregistrées le long des pistes de la bande sont reproduites par au moins une tête transductrice rotative, ledit appareil comprenant des moyens (106) pour comparer les informations d'identification de trame (108 à 112) comprises dans les informations vidéo reproduites à partir de la bande à des informations d'identification de trame de référence correspondantes (100 à 104) identifiant des intervalles de trame de référence distincts d'une séquence récurrente d'une pluralité d'intervalles de trame de référence distincts et pour générer un signal de coïncidence lorsque les informations d'identification de trame comparées identifient une coïncidence entre un intervalle de trame distinct d'informations vidéo reproduites à partir de la bande et un intervalle de trame de référence distinct correspondant se produisant dans la séquence d'intervalles de trame de référence distincts, la génération du signal de coïncidence (114) autorisant l'application du signal de commande au cabestan.

11. Appareil selon la revendication 10, dans lequel ladite vélocité initiale est inférieure à environ la moitié de ladite vélocité normale.

12. Appareil selon la revendication 10 ou la revendication 11, dans lequel lesdits moyens de comparaison (106) comprennent un comparateur binaire à bits multiples, lesdites informations d'identification de trame se composent d'un premier signal binaire appliqué à une entrée dudit comparateur et lesdites informations d'identification de trame vidéo de référence se composent d'un second signal binaire appliqué à une seconde entrée dudit comparateur, ledit comparateur fournissant le signal de coïncidence lorsque lesdits signaux binaires représentent le même nombre binaire.

13. Appareil selon l'une quelconque des revendications 10 à 12, et comprenant en outre une bascule (116) ayant une entrée d'horloge et une entrée de signal, l'entrée d'horloge étant couplée pour recevoir le signal de coïncidence (114) et l'entrée de signal étant couplée pour recevoir un signal de commande de changement de vélocité (118), ladite bascule couplant le signal de commande de changement de vélocité pour autoriser l'entraînement du cabestan lorsque son entrée d'horloge reçoit ledit signal de coïncidence.

14. Appareil selon l'une quelconque des revendications précédentes, dans lequel la tête rotative (402) est montée sur un élément mobile pour déplacer la tête transductrice transversalement par rapport à la direction longitudinale des pistes d'informations vidéo, et comprenant, en outre, des moyens pour commander l'élément mobile pendant le changement de la vélocité du transport de la bande pour faire en sorte que la tête transductrice suive consécutivement les pistes enregistrées d'informations vidéo successives.

15. Procédé de changement de la vélocité de transport d'une bande d'une vélocité initiale à une vélocité normale à laquelle des informationsvidéo sont reproduites à partir de la bande, la vélocité initiale étant sensiblement différente de la vélocité normale, la bande étant entraînée par un cabestan commandé par un asservissement et transportée suivant un trajet hélicoïdal autour d'un guide de bande lorsque des informations vidéo enregistrées le long de pistes de la bande sont reproduites par au moins une tête transductrice rotative (402), un signal de rythme de référence du système identifiant des intervalles apparaissant périodiquement, ainsi qu'un signal de rythme représentatif de la vitesse de reproduction d'informations enregistrées sur la bande par rapport au signal de rythme de référence étant prévus, ledit signal de rythme identifiant des intervalles apparaissant périodiquement, qui correspondent aux intervalles apparaissant périodiquement définis par ledit signal de rythme de référence du système et à partir desquels la vélocité de transport de la bande peut être déterminée, caractérisé par le fait que pendant un intervalle de changement de vélocité entre la vélocité initiale et la vélocité normale, le transport de la bande est commandé en fonction du signal de rythme de référence du système et dudit signal de rythme, de telle manière que, au moins à la fin de l'intervalle de changement de vélocité, il y ait une relation de rythme sélectionnée entre le signal de rythme de référence du système et ledit signal de rythme et que le déplacement net de la bande à la fin dudit intervalle de changement de vélocité soit proportionnel au produit du changement de vélocité et de l'intervalle de changement de vélocité.

16. Procédé selon la revendication 15, dans lequel la relation de rythme sélectionnée est maintenue tout au long de l'intervalle de changement de vélocité.

17. Procédé selon la revendication 15 et comprenant, en outre, le fait de maintenir un nombre égal à une différence d'intervalles entre ledit signal de rythme de référence du système et ledit signal de rythme pendant l'intervalle de changement de vélocité; et dans lequel il est mis fin à l'intervalle de changement de vélocité lorsque la bande est à ladite vélocité sélectionnée et que le nombre maintenu par lesdits moyens de maintien de différence est égal à zéro.

18. Procédé selon l'une quelconque des revendications 15 à 17 dans lequel les informations vidéo comprennent des informations d'image dans une séquence récurrente d'une multiplicité d'intervalles de trame distincts et des informations d'identification de trame identifiant chaque intervalle de trame distinct de chaque séquence, le procédé consistant, en outre, à comparer les informations d'identification de trame contenues dans les informations vidéo reproduites à partir de la bande aux informations d'identification de trame de référence identifiant chaque intervalle de trame de référence distinct de chaque séquence récurrente d'une multiplicité d'intervalles de trame de référence distincts, les intervalles de trame de référence distincts se produisant à une cadence stable et leur séquence récurrente correspondant à la séquence récurrente d'intervalles de trame d'informations vidéo distincts, et à activer ledit cabestan pour changer la vélocité du transport de la bande de la vélocité prédéterminée à la vélocité normale lorsque les informations d'identification de trame comparées identifient une coïncidence entre un intervalle de trame distinct d'informations vidéo reproduites à partir de la bande et un intervalle de trame de référence distinct correspondant se produisant dans la séquence d'intervalles de trame de référence distincts.

19. Procédé selon la revendication 18, dans lequel le cabestan est activé pour charger la vélocité du transport de la bande lorsqu'il se produit une coïncidence par rapport à un intervalle de trame de référence particulier de la séquence d'intervalles de trame de référence distincts.

20. Procédé selon la revendication 18, dans lequel lesdites informations vidéo sont constituées par un signal d'informations vidéo couleur NTSC et ladite séquence récurrente d'une multiplicité d'intervalles de trame distincts comprend quatre trames consécutives.

21. Procédé selon la revendication 18, dans lequel lesdites informations vidéo couleur constituées par un signal d'informations vidéo couleur PAL et ladite séquence récurrente d'une multiplicité d'intervalles de trame distincts comprend huit trames consécutives.

22. Procédé selon l'une quelconque des revendications 15 à 21, dans lequel la tête rotative est commandée par un asservissement de positionnement sur piste de la tête de façon à ce que la tête suive les pistes lorsque des informations vidéo sont reproduites à partir de ces pistes à diverses vélocités de transport de la bande, le procédé comportant, en outre, l'étape consistant à activer l'asservissement de positionnement sur piste de la tête pendant l'intervalle de changement de vélocité afin de faire en sorte que la tête suive consécutivement les pistes enregistrées d'informations vidéo successives.
